# EUROPEAN PATENT SPECIFICATION

(11) **EP 4 193 559 B1**
(45) Date of publication and mention of the grant of the patent: **19.02.2025**
(21) Application number: 21766263.4
(22) Date of filing: 06.08.2021
(51) Int. Cl.: H04L 5/00

(54) **MULTI-CARRIER BASED SIDELINK COMMUNICATIONS**
MEHRTRÄGERBASIERTE FUNKKOMMUNIKATION MIT SIDELINK
COMMUNICATIONS À BASE MULTI-PORTEUSES AVEC LIAISON LATÉRALE

(30) Priority: 07.08.2020 US 202063062704 P
(43) Date of publication of application: 14.06.2023
(73) Proprietor: Interdigital Patent Holdings, Inc., Wilmington, DE 19809-3727 (US)
(72) Inventor: PAN, Kyle, Wilmington, DE 19809-3727 (US); ZHANG, Guodong, Wilmington, DE 19809-3727 (US); SVEDMAN, Patrick, Wilmington, DE 19809-3727 (US); LI, Yifan, Wilmington, DE 19809-3727 (US); ADJAKPLE, Pascal, Wilmington, DE 19809-3727 (US); TSAI, Allan, Wilmington, DE 19809-3727 (US); AWADIN, Mohamed, Wilmington, DE 19809-3727 (US)
(74) Representative: D Young & Co LLP
(86) International application number: PCT/US2021/044871
(87) International publication number: WO 2022/032050

(56) References cited:
- US-A1- 2020 053 675
- ZTE: "Considering CA on PC5 carrier", vol. RAN WG1, no. Hangzhou; 20170515 - 20170519, 14 May 2017 (2017-05-14), XP051272426, Retrieved from the Internet <URL:http://www.3gpp.org/ftp/Meetings_3GPP_SYNC/RAN1/Docs/> [retrieved on 20170514]
- ERICSSON: "Discussion on PC5 Multiple Carriers", vol. RAN WG2, no. Nanjing, P.R. China; 20160523 - 20160527, 22 May 2016 (2016-05-22), XP051105417, Retrieved from the Internet <URL:http://www.3gpp.org/ftp/Meetings_3GPP_SYNC/RAN2/Docs/> [retrieved on 20160522]
- ERICSSON: "Carrier Aggregation Enhancements for PC5", vol. RAN WG2, no. Berlin, Germany; 20170821 - 20170825, 20 August 2017 (2017-08-20), XP051319111, Retrieved from the Internet <URL:http://www.3gpp.org/ftp/Meetings_3GPP_SYNC/RAN2/Docs/> [retrieved on 20170820]
- FRAUNHOFER HHI ET AL: "Design of NR V2X Physical Layer Structures", vol. RAN WG1, no. Chongqing, China; 20191014 - 20191020, 7 October 2019 (2019-10-07), XP051808943, Retrieved from the Internet <URL:https://ftp.3gpp.org/tsg_ran/WG1_RL1/TSGR1_98b/Docs/R1-1910554.zip R1-1910554_PhyLayerStruct.docx> [retrieved on 20191007]
- ERICSSON: "On L2 IDs", vol. RAN WG2, no. Athens, Greece; 20190225 - 20190301, 14 February 2019 (2019-02-14), XP051603006, Retrieved from the Internet <URL:http://www.3gpp.org/ftp/tsg%5Fran/WG2%5FRL2/TSGR2%5F105/Docs/R2%2D1901653%2Ezip> [retrieved on 20190214]

## Description

### CROSS-REFERENCE TO RELATED APPLICATIONS

This application claims the benefit of U.S. Provisional Patent Application No. 63/062.704 filed on August 7th, 2020, titled "Multi-carrier based new radio vehicle communications with sidelink,"

### BACKGROUND

This disclosure pertains to wireless vehicle communications, such as communications described in the 3GPP TR 22.886 Study on enhancement of 3GPP Support for 5G V2X Services, Release 16, V16.2.0, and the 3GPP TS 22.186 Enhancement of 3GPP support for V2X scenarios (Stage 1), Release 16, V16.2.0.

Patent publication US2020053675A1 discloses a cross-carrier scheduling of component carriers where the selected component carriers are signalled via a SCI included in the PSCCH.

### SUMMARY

Solutions for efficient multi-carrier scheduling and operation for NR V2X with sidelink are proposed herein. A User Equipment, UE, and a method of configuration of the UE by network equipment are defined in the independent claims 1 and 9.

### BRIEF DESCRIPTION OF THE DRAWINGS

A more detailed understanding may be had from the following description, given by way of example in conjunction with the accompanying drawings.
Figure 1A illustrates an example communications system.
Figures 1B, 1C, and 1D are system diagrams of example RANs and core networks.
Figure 1E illustrates another example communications system.
Figure 1F is a block diagram of an example apparatus or device, such as a WTRU.
Figure 1G is a block diagram of an exemplary computing system.
Figure 2 is a flow diagram of an example method of cross carrier for multi-carrier NR V2X Sidelink with a Carrier Indication Field (CIF).
Figure 3 is a flow diagram of an example method of cross carrier for multi-carrier NR V2X sidelink with multiple resource pools.
Figure 4 is a timing diagram of an example of multi-carrier cross scheduling for NR sidelink.
Figure 5 is a flow diagram of an example method of cross carrier scheduling for multi-carrier NR V2X sidelink.
Figure 6 is a flow diagram of another example method of cross carrier scheduling for multi-carrier NR V2X sidelink.
Figure 7 is a flow diagram of an example method of cross carrier scheduling for multi-carrier NR V2X sidelink with multiple resource pools.
Figure 8 is a flow diagram of another example method of cross carrier scheduling for multi-carrier NR V2X sidelink with multiple resource pools.
Figure 9 is a flow diagram of an example method of cross carrier for multi-carrier NR V2X sidelink with and without CIF configured.

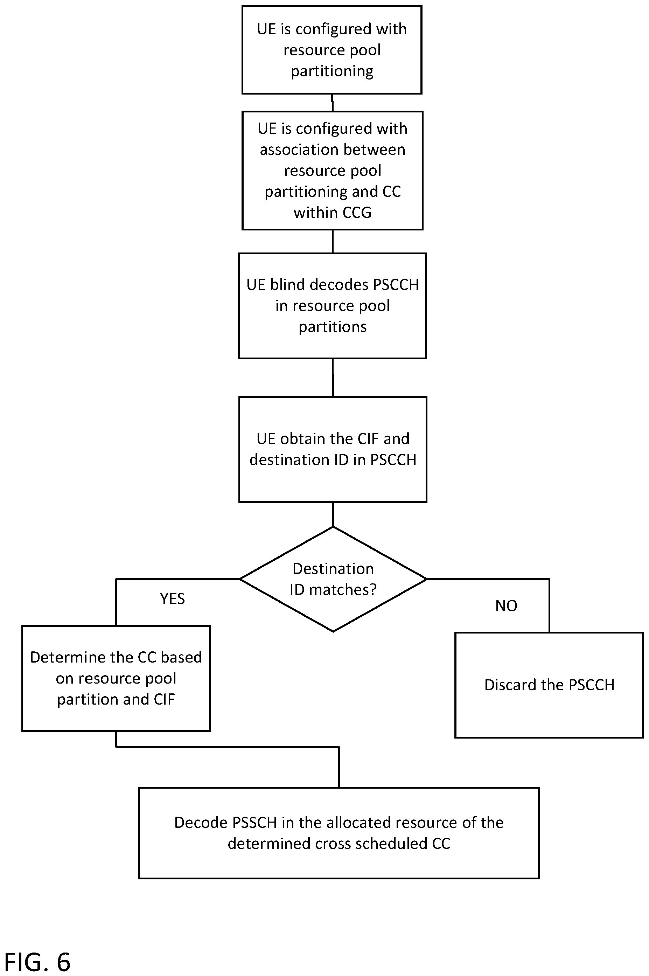

The present invention is based on the flow diagram presented with figure 6.

### DETAILED DESCRIPTION

### Services and Requirements

NR V2X is designed with a broader set of more advanced V2X use cases in mind and are broadly arranged into four use case groups: vehicular platooning, extended sensors, advanced driving, and remote driving.

Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together.

Extended Sensors enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics.

Advanced Driving enables semi-automated or full-automated driving. Each vehicle and/or RSU shares its own perception data obtained from its local sensors with vehicles in proximity and that allows vehicles to synchronize and coordinate their trajectories or maneuvers. Each vehicle shares its driving intention with vehicles in proximity too.

Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements.

The most demanding requirements set are for a maximum sidelink range of 1000 m, a maximum throughput of 1 Gbps, a shortest latency of 3 ms, a maximum reliability of 99.999%, and a maximum transmission rate of 100 messages/second. However, there is not a use case which, on its own, demands all of these bounding requirements. There are also requirements relating to security, integrity, authorization, and privacy.

### NR V2X

NR V2X has physical layer support for broadcast, unicast, and groupcast sidelink operation. The addition of unicast and groupcast is linked with the introduction of sidelink HARQ feedback, high order modulation, sidelink CSI, and PC5-RRC, etc.

### Physical sidelink channels and signals

The NR V2X sidelink uses the following physical channels and signals: Physical sidelink broadcast channel (PSBCH) and its DMRS; Physical sidelink control channel (PSCCH) and its DMRS; Physical sidelink shared channel (PSSCH) and its DMRS; Physical sidelink feedback channel (PSFCH); Phase-tracking reference signal (PT-RS) in FR2; Channel state information reference signal (CSI-RS); and Sidelink primary and secondary synchronization signals (S-PSS and S-SSS) which are organized into the sidelink synchronization signal block (S-SSB) together with PSBCH. S-PSS and S-SSS can be referred to jointly as the sidelink synchronization signal (SLSS).

NR-V2X sidelink supports subcarrier spacings of 15, 30, 60 and 120 kHz. Their associations to CPs and frequency ranges are as for NR UL/DL, but using only the CP-OFDM waveform. The modulation schemes available are QPSK, 16-QAM, 64-QAM, and 256-QAM.

PSBCH transmits the SL-BCH transport channel, which carries the sidelink V2X Master Information Block (MIB-V2X) from the RRC layer. When in use, PSBCH transmits MIB-V2X every 160 ms in 11 RBs of the SL bandwidth, with possible repetitions in the period. DMRS associated with PSBCH are transmitted in every symbol of the S-SSB slot. S-PSS and S-SSS are transmitted together with PSBCH in the S-SSB. They jointly convey the SLSS ID used by the UE.

Sidelink control information (SCI) in NR V2X is transmitted in two stages. The first-stage SCI is carried on PSCCH and contains information to enable sensing operations, as well as information about the resource allocation of the PSSCH.

PSSCH transmits the second-stage SCI and the SL-SCH transport channel. The second-stage SCI carries information needed to identify and decode the associated SL-SCH, as well as control for HARQ procedures, and triggers for CSI feedback, etc. SL-SCH carries the TB of data for transmission over SL.

The resources in which PSSCH is transmitted can be scheduled or configured by a gNB or determined through a sensing procedure conducted autonomously by the transmitting UE. A given TB can be transmitted multiple times. DMRS associated with rank-1 or rank-2 PSSCH can be transmitted in 2, 3, or 4 sidelink symbols distributed through a sidelink slot. Multiplexing between PSCCH and PSSCH is in time and frequency within a slot.

PSFCH carries HARQ feedback over the sidelink from a UE which is an intended recipient of a PSSCH transmission (henceforth an Rx UE) to the UE which performed the transmission (henceforth a Tx UE). Sidelink HARQ feedback may be in the form of conventional ACK/NACK, or NACK-only with nothing transmitted in case of successful decoding. PSFCH transmits a Zadoff-Chu sequence in one PRB repeated over two OFDM symbols, the first of which can be used for AGC, near the end of the sidelink resource in a slot. The time resources for PSFCH are (pre-)configured to occur once in every 1, 2, or 4 slots.

### Resource allocation modes -Mode 1

Mode 1 is for resource allocation by gNB. The use cases intended for NR V2X can generate a diverse array of periodic and aperiodic message types. Therefore, resource allocation mode 1 provides dynamic grants of sidelink resources from a gNB, as well as grants of periodic sidelink resources configured semi-statically by RRC.

A dynamic sidelink grant DCI can provide resources for one or multiple transmissions of a transport block, in order to allow control of reliability. The transmission(s) can be subject to the sidelink HARQ procedure, if that operation is enabled.

A sidelink configured grant can be such that it is configured once and can be used by the UE immediately, until it is released by RRC signaling (known as Type 1). A UE is allowed to continue using this type of sidelink configured grant when beam failure or physical layer problems occur in NR Uu until an RLF detection timer expires, before falling back to an exception resource pool. The other type of sidelink configured grant, known as Type 2, is configured once but cannot be used until the gNB sends the UE a DCI indicating it is now active, and only until another DCI indicates de-activation. The resources in both types are a set of sidelink resources recurring with a periodicity which a gNB will desire to match to the characteristics of the V2X traffic. Multiple configured grants can be configured, to allow provision for different services, traffic types, etc.

MCS information for dynamic and configured grants can optionally be provided or constrained by RRC signaling instead of the traditional DCT. RRC can configure the exact MCS the Tx UE uses, or a range of MCS. It may also be left unconfigured. For the cases where RRC does not provide the exact MCS, the transmitting UE is left to select an appropriate MCS itself based on the knowledge it has of the TB to be transmitted and, potentially, the sidelink radio conditions.

### Resource allocation modes -Mode 2

Mode 2 is for UE autonomous resource selection. Its basic structure is of a UE sensing, within a (pre-)configured resource pool, which resources are not in use by other UEs with higher-priority traffic, and choosing an appropriate amount of such resources for its own transmissions. Having selected such resources, the UE can transmit and re-transmit in them a certain number of times, or until a cause of resource reselection is triggered.

The mode 2 sensing procedure can select and then reserve resources for a variety of purposes reflecting that NR V2X introduces sidelink HARQ in support of unicast and groupcast in the physical layer. It may reserve resources to be used for a number of blind (re-)transmissions or HARQ-feedback-based (re-)transmissions of a transport block, in which case the resources are indicated in the SCI(s) scheduling the transport block. Alternatively, it may select resources to be used for the initial transmission of a later transport block, in which case the resources are indicated in an SCI scheduling a current transport block. Finally, an initial transmission of a transport block can be performed after sensing and resource selection, but without a reservation.

The first-stage SCIs transmitted by UEs on PSCCH indicate the time-frequency resources in which the UE will transmit a PSSCH. These SCI transmissions are used by sensing UEs to maintain a record of which resources have been reserved by other UEs in the recent past.

The sensing UE then selects resources for its (re-)transmission(s) from within a resource selection window. The window starts shortly after the trigger for (re-)selection of resources, and cannot be longer than the remaining latency budget of the packet due to be transmitted. Reserved resources in the selection window with SL-RSRP above a threshold are excluded from being candidates by the sensing UE, with the threshold set according to the priorities of the traffic of the sensing and transmitting UEs. Thus, a higher priority transmission from a sensing UE can occupy resources which are reserved by a transmitting UE with sufficiently low SL-RSRP and sufficiently lower-priority traffic.

### Example (Challenges or Multi-carrier Scheduling and Operation for NR Sidelink

Multi-carrier is an enabler for higher data rates, higher throughput, and better reliability. NR sidelink currently only supports single carrier. For multi-carrier in sidelink, the mechanism for PSCCH-based cross scheduling and processing for multi-carrier operation is needed. The mechanism for SCI with two-stage operation is required. There is a need to design a mechanism for efficient multi-carrier operation for NR V2X sidelink communications considering multi-carrier scheduling, sidelink control information, PSCCH, two stage processing and resource allocation modes (e.g., modes 1 and 2) in the designs.

### Example Environments

3GPP has identified a variety of use cases that NR is expected to support, resulting in a wide variety of user experience requirements for data rate, latency, and mobility. The use cases include the following general categories: enhanced mobile broadband (eMBB) ultra-reliable low-latency Communication (URLLC), massive machine type communications (mMTC), network operation (e.g., network slicing, routing, migration and interworking, energy savings), and enhanced vehicle-to-everything (eV2X) communications, which may include any of Vehicle-to-Vehicle Communication (V2V), Vehicle-to-Infrastructure Communication (V21), Vehicle-to-Network Communication (V2N), Vehicle-to-Pedestrian Communication (V2P), and vehicle communications with other entities. Specific service and applications in these categories include, e.g., monitoring and sensor networks, device remote controlling, bi-directional remote controlling, personal cloud computing, video streaming, wireless cloud-based office, first responder connectivity, automotive ecall, disaster alerts, real-time gaming, multi-person video calls, autonomous driving, augmented reality, tactile internet, virtual reality, home automation, robotics, and aerial drones to name a few. All of these use cases and others are contemplated herein.

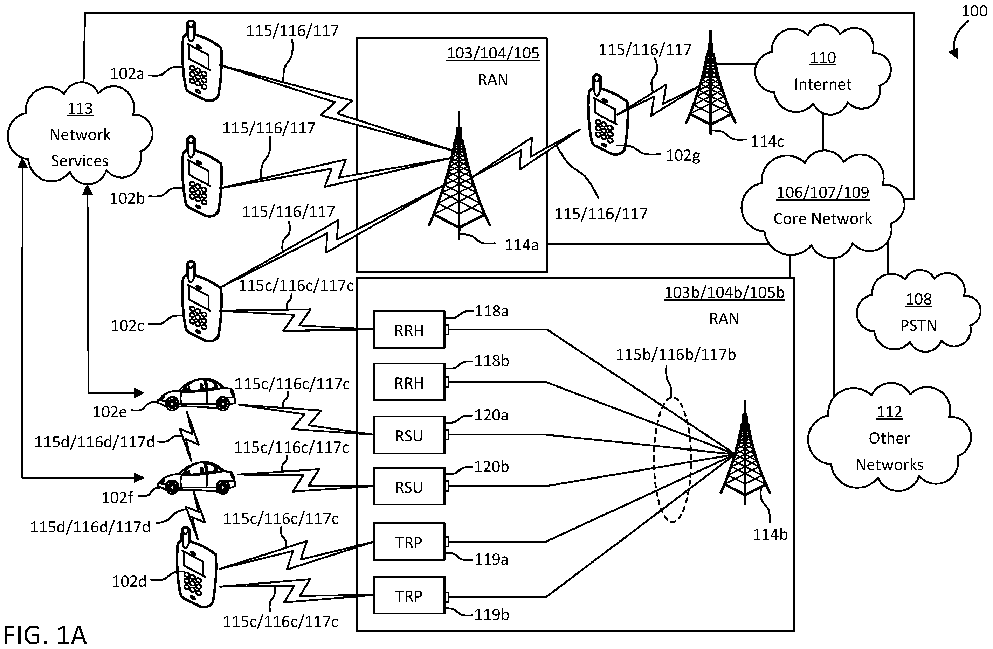

Figure 1A illustrates an example communications system 100 in which the systems, methods, and apparatuses described and claimed herein may be used. The communications system 100 may include wireless transmit/receive units (WTRUs) 102a, 102b, 102c, 102d, 102e, 102f, and/or 102g, which generally or collectively may be referred to as WTRU 102 or WTRUs 102. The communications system 100 may include, a radio access network (RAN) 103/104/105/103b/104b/105b, a core network 106/107/109, a public switched telephone network (PSTN) 108, the Internet 110, other networks 112, and Network Services 113. 113. Network Services 113 may include, for example, a V2X server, V2X functions, a ProSe server, ProSe functions, IoT services, video streaming, and/or edge computing, etc.

It will be appreciated that the concepts disclosed herein may be used with any number of WTRUs, base stations, networks, and/or network elements Each of the WTRUs 102 may be any type of apparatus or device configured to operate and/or communicate in a wireless environment. In the example of Figure 1A, each of the WTRUs 102 is depicted in Figures 1A-1E as a hand-held wireless communications apparatus. It is understood that with the wide variety of use cases contemplated for wireless communications, each WTRU may comprise or be included in any type of apparatus or device configured to transmit and/or receive wireless signals, including, by way of example only, user equipment (UE), a mobile station, a fixed or mobile subscriber unit, a pager, a cellular telephone, a personal digital assistant (PDA), a smartphone, a laptop, a tablet, a netbook, a notebook computer, a personal computer, a wireless sensor, consumer electronics, a wearable device such as a smart watch or smart clothing, a medical or eHealth device, a robot, industrial equipment, a drone, a vehicle such as a car, bus or truck, a train, or an airplane, and the like.

The communications system 100 may also include a base station 114a and a base station 114b. In the example of Figure 1A, each base stations 114a and 114b is depicted as a single element. In practice, the base stations 114a and 114b may include any number of interconnected base stations and/or network elements. Base stations 114a may be any type of device configured to wirelessly interface with at least one of the WTRUs 102a, 102b, and 102c to facilitate access to one or more communication networks, such as the core network 106/107/109, the Internet 110, Network Services 113, and/or the other networks 112. Similarly, base station 114b may be any type of device configured to wiredly and/or wirelessly interface with at least one of the Remote Radio Heads (RRHs) 118a, 118b, Transmission and Reception Points (TRPs) 119a, 119b, and/or Roadside Units (RSUs) 120a and 120b to facilitate access to one or more communication networks, such as the core network 106/107/109, the Internet 110, other networks 112, and/or Network Services 113. RRHs 118a, 118b may be any type of device configured to wirelessly interface with at least one of the WTRUs 102, e.g., WTRU 102c, to facilitate access to one or more communication networks, such as the core network 106/107/109, the Internet 110, Network Services 113, and/or other networks 112.

TRPs 119a, 119b may be any type of device configured to wirelessly interface with at least one of the WTRU 102d, to facilitate access to one or more communication networks, such as the core network 106/107/109, the Internet 110, Network Services 113, and/or other networks 112. RSUs 120a and 120b may be any type of device configured to wirelessly interface with at least one of the WTRU 102e or 102f, to facilitate access to one or more communication networks, such as the core network 106/107/109, the Internet 110, other networks 112, and/or Network Services 113. By way of example, the base stations 114a, 114b may be a Base Transceiver Station (BTS), a Node-B, an eNode B, a Home Node B, a Home eNode B, a Next Generation Node-B (gNode B), a satellite, a site controller, an access point (AP), a wireless router, and the like.

The base station 114a may be part of the RAN 103/104/105, which may also include other base stations and/or network elements (not shown), such as a Base Station Controller (BSC), a Radio Network Controller (RNC), relay nodes, etc. Similarly, the base station 114b may be part of the RAN 103b/104b/105b, which may also include other base stations and/or network elements (not shown), such as a BSC, a RNC, relay nodes, etc. The base station 114a may be configured to transmit and/or receive wireless signals within a particular geographic region, which may be referred to as a cell (not shown). Similarly, the base station 114b may be configured to transmit and/or receive wired and/or wireless signals within a particular geographic region, which may be referred to as a cell (not shown). The cell may further be divided into cell sectors. For example, the cell associated with the base station 114a may be divided into three sectors. Thus, for example, the base station 114a may include three transceivers, e.g., one for each sector of the cell. The base station 114a may employ Multiple-Input Multiple Output (MIMO) technology and, therefore, may utilize multiple transceivers for each sector of the cell, for instance.

The base station 114a may communicate with one or more of the WTRUs 102a, 102b, 102c, and 102g over an air interface 115/116/117, which may be any suitable wireless communication link (e.g., Radio Frequency (RF), microwave, infrared (IR), ultraviolet (UV), visible light, cmWave, mmWave, etc.). The air interface 115/116/117 may be established using any suitable Radio Access Technology (RAT).

The base station 114b may communicate with one or more of the RRHs 118a and 118b, TRPs 119a and 119b, and/or RSUs 120a and 120b, over a wired or air interface 115b/116b/117b, which may be any suitable wired (e.g., cable, optical fiber, etc.) or wireless communication link (e.g., RF, microwave, IR, UV, visible light, cmWave, mmWave, etc.). The air interface 115b/116b/117b may be established using any suitable RAT.

The RRHs 118a, 118b, TRPs 119a, 119b and/or RSUs 120a, 120b, may communicate with one or more of the WTRUs 102c, 102d, 102e, 102f over an air interface 115c/116c/117c, which may be any suitable wireless communication link (e.g., RF, microwave, IR, ultraviolet UV, visible light, cmWave, mmWave, etc.) The air interface 115c/116c/117c may be established using any suitable RAT.

The WTRUs 102 may communicate with one another over a direct air interface 115d/116d/117d, such as Sidelink communication which may be any suitable wireless communication link (e.g., RF, microwave, IR, ultraviolet UV, visible light, cmWave, mmWave, etc.) The air interface 115d/116d/117d may be established using any suitable RAT.

The communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, or RRHs 118a, 118b,TRPs 119a, 119b and/or RSUs 120a and 120b in the RAN 103b/104b/105b and the WTRUs 102c, 102d, 102e, and 102f, may implement a radio technology such as Universal Mobile Telecommunications System (UMTS) Terrestrial Radio Access (UTRA), which may establish the air interface 115/116/117 and/or 115c/116c/117c respectively using Wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

The base station 114a in the RAN 103/104/105 and the WTRUs 102a, 102b, 102c, and 102g, or RRHs 118a and 118b, TRPs 119a and 119b, and/or RSUs 120a and 120b in the RAN 103b/104b/105b and the WTRUs 102c, 102d, may implement a radio technology such as Evolved UMTS Terrestrial Radio Access (E-UTRA), which may establish the air interface 115/116/117 or 115c/116c/117c respectively using Long Term Evolution (LTE) and/or LTE-Advanced (LTE-A), for example. The air interface 115/116/117 or 115c/116c/117c may implement 3GPP NR technology. The LTE and LTE-A technology may include LTE D2D and/or V2X technologies and interfaces (such as Sidelink communications, etc.) Similarly, the 3GPP NR technology may include NR V2X technologies and interfaces (such as Sidelink communications, etc.)

The base station 114a in the RAN 103/104/105 and the WTRUs 102a, 102b, 102c, and 102g or RRHs 118a and 118b, TRPs 119a and 119b, and/or RSUs 120a and 120b in the RAN 103b/104b/105b and the WTRUs 102c, 102d, 102e, and 102f may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114c in Figure 1A may be a wireless router, Home Node B, Home eNode B, or access point, for example, and may utilize any suitable RAT for facilitating wireless connectivity in a localized area, such as a place of business, a home, a vehicle, a train, an aerial, a satellite, a manufactory, a campus, and the like. The base station 114c and the WTRUs 102, e.g., WTRU 102e, may implement a radio technology such as IEEE 802.11 to establish a Wireless Local Area Network (WLAN). Similarly, the base station 114c and the WTRUs 102, e.g., WTRU 102d, may implement a radio technology such as IEEE 802.15 to establish a wireless personal area network (WPAN). The base station 114c and the WTRUs 102, e.g., WRTU 102e, may utilize a cellular-based RAT (e.g., WCDMA, CDMA2000, GSM, LTE, LTE-A, NR, etc.) to establish a picocell or femtocell. As shown in Figure 1A, the base station 114c may have a direct connection to the Internet 110. Thus, the base station 114c may not be required to access the Internet 110 via the core network 106/107/109.

The RAN 103/104/105 and/or RAN 103b/104b/105b may be in communication with the core network 106/107/109, which may be any type of network configured to provide voice, data, messaging, authorization and authentication, applications, and/or Voice Over Internet Protocol (VoIP) services to one or more of the WTRUs 102. For example, the core network 106/107/109 may provide call control, billing services, mobile location-based services, pre-paid calling, Internet connectivity, packet data network connectivity, Ethernet connectivity, video distribution, etc., and/or perform high-level security functions, such as user authentication.

Although not shown in Figure 1A, it will be appreciated that the RAN 103/104/105 and/or RAN 103b/104b/105b and/or the core network 106/107/109 may be in direct or indirect communication with other RANs that employ the same RAT as the RAN 103/104/105 and/or RAN 103b/104b/105b or a different RAT. For example, in addition to being connected to the RAN 103/104/105 and/or RAN 103b/104b/105b, which may be utilizing an E-UTRA radio technology, the core network 106/107/109 may also be in communication with another RAN (not shown) employing a GSM or NR radio technology.

The core network 106/107/109 may also serve as a gateway for the WTRUs 102 to access the PSTN 108, the Internet 110, and/or other networks 112. The PSTN 108 may include circuit-switched telephone networks that provide Plain Old Telephone Service (POTS). The Internet 110 may include a global system of interconnected computer networks and devices that use common communication protocols, such as the Transmission Control Protocol (TCP), User Datagram Protocol (UDP), and the internet protocol (IP) in the TCP/IP internet protocol suite. The other networks 112 may include wired or wireless communications networks owned and/or operated by other service providers. For example, the networks 112 may include any type of packet data network (e.g., an IEEE 802.3 Ethernet network) or another core network connected to one or more RANs, which may employ the same RAT as the RAN 103/104/105 and/or RAN 103b/104b/105b or a different RAT.

Some or all of the WTRUs 102a, 102b, 102c, 102d, 102e, and 102f in the communications system 100 may include multi-mode capabilities, e.g., the WTRUs 102a, 102b, 102c, 102d, 102e, and 102f may include multiple transceivers for communicating with different wireless networks over different wireless links. For example, the WTRU 102g shown in Figure 1A may be configured to communicate with the base station 114a, which may employ a cellular-based radio technology, and with the base station 114c, which may employ an IEEE 802 radio technology.

Although not shown in Figure 1A, it will be appreciated that a User Equipment may make a wired connection to a gateway. The gateway maybe a Residential Gateway (RG). The RG may provide connectivity to a Core Network 106/107/109. It will be appreciated that many of the ideas contained herein may equally apply to UEs that are WTRUs and UEs that use a wired connection to connect to a network. For example, the ideas that apply to the wireless interfaces 115, 116, 117 and 115c/116c/117c may equally apply to a wired connection.

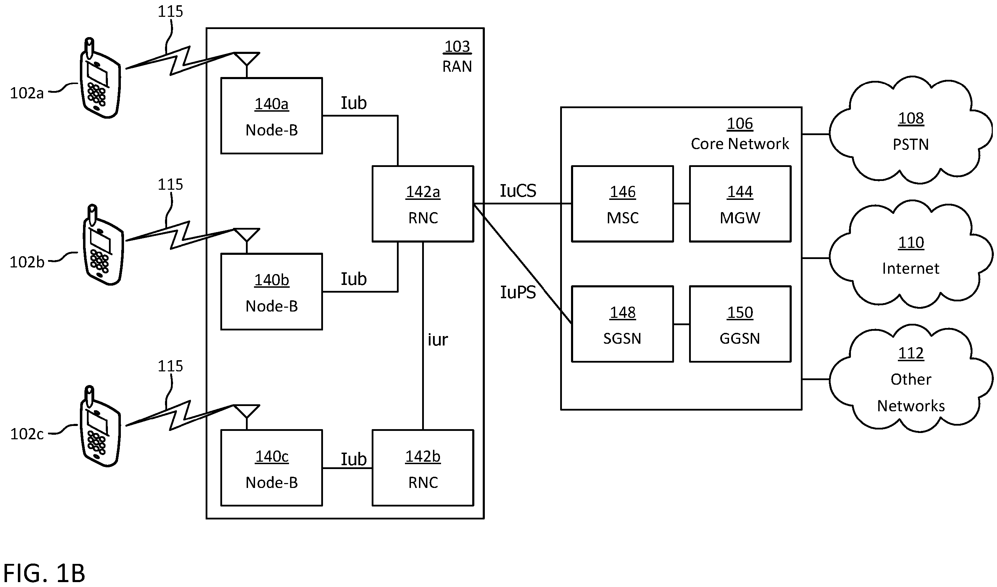

Figure 1B is a system diagram of an example RAN 103 and core network 106. As noted above, the RAN 103 may employ a UTRA radio technology to communicate with the WTRUs 102a, 102b, and 102c over the air interface 115. The RAN 103 may also be in communication with the core network 106. As shown in Figure 1B, the RAN 103 may include Node-Bs 140a, 140b, and 140c, which may each include one or more transceivers for communicating with the WTRUs 102a, 102b, and 102c over the air interface 115. The Node-Bs 140a, 140b, and 140c may each be associated with a particular cell (not shown) within the RAN 103. The RAN 103 may also include RNCs 142a, 142b. It will be appreciated that the RAN 103 may include any number of Node-Bs and Radio Network Controllers (RNCs.)

As shown in Figure 1B, the Node-Bs 140a, 140b may be in communication with the RNC 142a. Additionally, the Node-B 140c may be in communication with the RNC 142b. The Node-Bs 140a, 140b, and 140c may communicate with the respective RNCs 142a and 142b via an Iub interface. The RNCs 142a and 142b may be in communication with one another via an Iur interface. Each of the RNCs 142aand 142b may be configured to control the respective Node-Bs 140a, 140b, and 140c to which it is connected. In addition, each of the RNCs 142aand 142b may be configured to carry out or support other functionality, such as outer loop power control, load control, admission control, packet scheduling, handover control, macro-diversity, security functions, data encryption, and the like.

The core network 106 shown in Figure 1B may include a media gateway (MGW) 144, a Mobile Switching Center (MSC) 146, a Serving GPRS Support Node (SGSN) 148, and/or a Gateway GPRS Support Node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, and 102c with access to circuit-switched networks, such as the PSTN 108, to facilitate communications between the WTRUs 102a, 102b, and 102c, and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, and 102c with access to packet-switched networks, such as the Internet 110, to facilitate communications between and the WTRUs 102a, 102b, and 102c, and IP-enabled devices.

The core network 106 may also be connected to the other networks 112, which may include other wired or wireless networks that are owned and/or operated by other service providers.

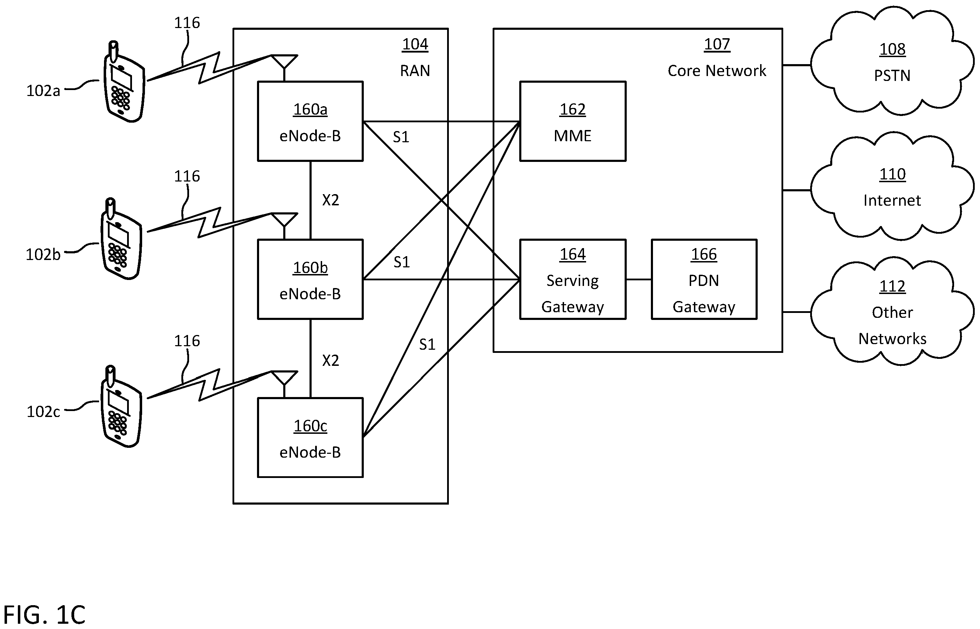

Figure 1C is a system diagram of an example RAN 104 and core network 107. As noted above, the RAN 104 may employ an E-UTRA radio technology to communicate with the WTRUs 102a, 102b, and 102c over the air interface 116. The RAN 104 may also be in communication with the core network 107.

The RAN 104 may include eNode-Bs 160a, 160b, and 160c, though it will be appreciated that the RAN 104 may include any number of eNode-Bs. The eNode-Bs 160a, 160b, and 160c may each include one or more transceivers for communicating with the WTRUs 102a, 102b, and 102c over the air interface 116. For example, the eNode-Bs 160a, 160b, and 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink and/or downlink, and the like. As shown in Figure 1C, the eNode-Bs 160a, 160b, and 160c may communicate with one another over an X2 interface.

The core network 107 shown in Figure 1C may include a Mobility Management Gateway (MME) 162, a serving gateway 164, and a Packet Data Network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, and 102c, bearer activation/deactivation, selecting a particular serving gateway during an initial attach of the WTRUs 102a, 102b, and 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and 160c in the RAN 104 via the S1 interface. The serving gateway 164 may generally route and forward user data packets to/from the WTRUs 102a, 102b, and 102c. The serving gateway 164 may also perform other functions, such as anchoring user planes during inter-eNode B handovers, triggering paging when downlink data is available for the WTRUs 102a, 102b, and 102c, managing and storing contexts of the WTRUs 102a, 102b, and 102c, and the like.

The serving gateway 164 may also be connected to the PDN gateway 166, which may provide the WTRUs 102a, 102b, and 102c with access to packet-switched networks, such as the Internet 110, to facilitate communications between the WTRUs 102a, 102b, 102c, and IP-enabled devices.

The core network 107 may facilitate communications with other networks. For example, the core network 107 may provide the WTRUs 102a, 102b, and 102c with access to circuit-switched networks, such as the PSTN 108, to facilitate communications between the WTRUs 102a, 102b, and 102c and traditional land-line communications devices. For example, the core network 107 may include, or may communicate with, an IP gateway (e.g., an IP Multimedia Subsystem (IMS) server) that serves as an interface between the core network 107 and the PSTN 108. In addition, the core network 107 may provide the WTRUs 102a, 102b, and 102c with access to the networks 112, which may include other wired or wireless networks that are owned and/or operated by other service providers.

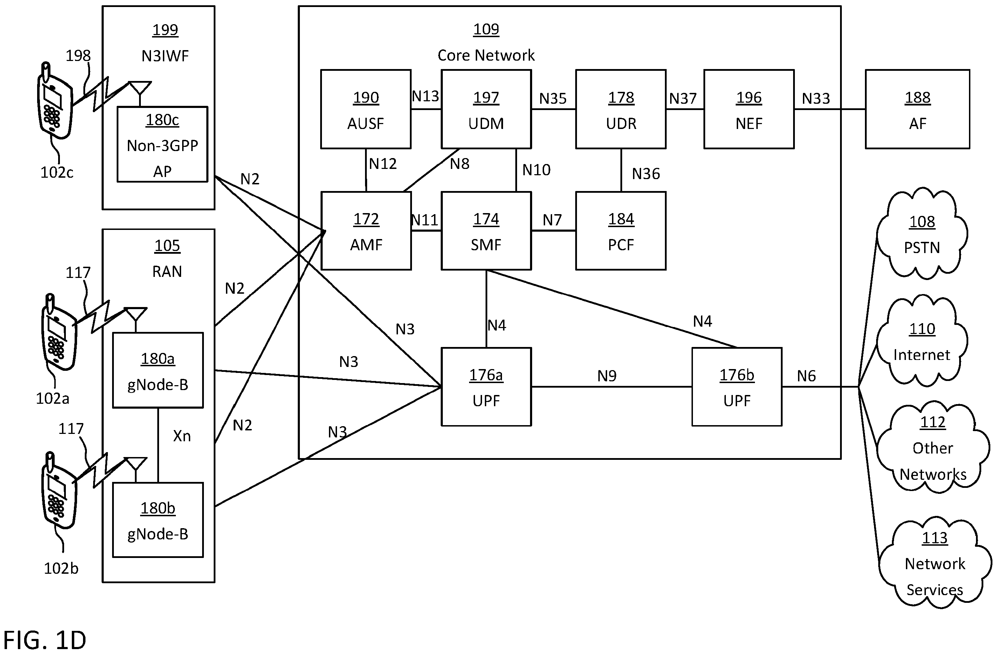

Figure 1D is a system diagram of an example RAN 105 and core network 109. The RAN 105 may employ an NR radio technology to communicate with the WTRUs 102a and 102b over the air interface 117. The RAN 105 may also be in communication with the core network 109. A Non-3GPP Interworking Function (N3IWF) 199 may employ a non-3GPP radio technology to communicate with the WTRU 102c over the air interface 198. The N31WF 199 may also be in communication with the core network 109.

The RAN 105 may include gNode-Bs 180a and 180b. It will be appreciated that the RAN 105 may include any number of gNode-Bs. The gNode-Bs 180a and 180b may each include one or more transceivers for communicating with the WTRUs 102a and 102b over the air interface 117. When integrated access and backhaul connection are used, the same air interface may be used between the WTRUs and gNode-Bs, which may be the core network 109 via one or multiple gNBs. The gNode-Bs 180a and 180b may implement MIMO, MU-MIMO, and/or digital beamforming technology. Thus, the gNode-B 180a, for example, may use multiple antennas to transmit wireless signals to, and receive wireless signals from, the WTRU 102a. It should be appreciated that the RAN 105 may employ of other types of base stations such as an eNode-B. It will also be appreciated the RAN 105 may employ more than one type of base station. For example, the RAN may employ eNode-Bs and gNode-Bs.

The N3IWF 199 may include a non-3GPP Access Point 180c. It will be appreciated that the N3IWF 199 may include any number of non-3GPP Access Points. The non-3GPP Access Point 180c may include one or more transceivers for communicating with the WTRUs 102c over the air interface 198. The non-3GPP Access Point 180c may use the 802.11 protocol to communicate with the WTRU 102c over the air interface 198.

Each of the gNode-Bs 180a and 180b may be associated with a particular cell (not shown) and may be configured to handle radio resource management decisions, handover decisions, scheduling of users in the uplink and/or downlink, and the like. As shown in Figure 1D, the gNode-Bs 180a and 180b may communicate with one another over an Xn interface, for example.

The core network 109 shown in Figure 1D may be a 5G core network (5GC). The core network 109 may offer numerous communication services to customers who are interconnected by the radio access network. The core network 109 comprises a number of entities that perform the functionality of the core network. As used herein, the term "core network entity" or "network function" refers to any entity that performs one or more functionalities of a core network. It is understood that such core network entities may be logical entities that are implemented in the form of computer-executable instructions (software) stored in a memory of, and executing on a processor of, an apparatus configured for wireless and/or network communications or a computer system, such as system 90 illustrated in Figure x1G.

In the example of Figure 1D, the 5G Core Network 109 may include an access and mobility management function (AMF) 172, a Session Management Function (SMF) 174, User Plane Functions (UPFs) 176a and 176b, a User Data Management Function (UDM) 197, an Authentication Server Function (AUSF) 190, a Network Exposure Function (NEF) 196, a Policy Control Function (PCF) 184, a Non-3GPP Interworking Function (N3IWF) 199, a User Data Repository (UDR) 178. While each of the foregoing elements are depicted as part of the 5G core network 109, it will be appreciated that any one of these elements may be owned and/or operated by an entity other than the core network operator. It will also be appreciated that a 5G core network may not consist of all of these elements, may consist of additional elements, and may consist of multiple instances of each of these elements. Figure 1D shows that network functions directly connect to one another, however, it should be appreciated that they may communicate via routing agents such as a diameter routing agent or message buses.

In the example of Figure 1D, connectivity between network functions is achieved via a set of interfaces, or reference points. It will be appreciated that network functions could be modeled, described, or implemented as a set of services that are invoked, or called, by other network functions or services. Invocation of a Network Function service may be achieved via a direct connection between network functions, an exchange of messaging on a message bus, calling a software function, etc.

The AMF 172 may be connected to the RAN 105 via an N2 interface and may serve as a control node. For example, the AMF 172 may be responsible for registration management, connection management, reachability management, access authentication, access authorization. The AMF may be responsible forwarding user plane tunnel configuration information to the RAN 105 via the N2 interface. The AMF 172 may receive the user plane tunnel configuration information from the SMF via an N11 interface. The AMF 172 may generally route and forward NAS packets to/from the WTRUs 102a, 102b, and 102c via an N1 interface. The N1 interface is not shown in Figure 1D.

The SMF 174 may be connected to the AMF 172 via an N11 interface. Similarly, the SMF may be connected to the PCF 184 via an N7 interface, and to the UPFs 176a and 176b via an N4 interface. The SMF 174 may serve as a control node. For example, the SMF 174 may be responsible for Session Management, IP address allocation for the WTRUs 102a, 102b, and 102c, management and configuration of traffic steering rules in the UPF 176a and UPF 176b, and generation of downlink data notifications to the AMF 172.

The UPF 176a and UPF176b may provide the WTRUs 102a, 102b, and 102c with access to a Packet Data Network (PDN), such as the Internet 110, to facilitate communications between the WTRUs 102a, 102b, and 102c and other devices. The UPF 176a and UPF 176b may also provide the WTRUs 102a, 102b, and 102c with access to other types of packet data networks. For example, Other Networks 112 may be Ethernet Networks or any type of network that exchanges packets of data. The UPF 176a and UPF 176b may receive traffic steering rules from the SMF 174 via the N4 interface. The UPF 176a and UPF 176b may provide access to a packet data network by connecting a packet data network with an N6 interface or by connecting to each other and to other UPFs via an N9 interface. In addition to providing access to packet data networks, the UPF 176 may be responsible packet routing and forwarding, policy rule enforcement, quality of service handling for user plane traffic, downlink packet buffering.

The AMF 172 may also be connected to the N3IWF 199, for example, via an N2 interface. The N3IWF facilitates a connection between the WTRU 102c and the 5G core network 170, for example, via radio interface technologies that are not defined by 3GPP. The AMF may interact with the N3IWF 199 in the same, or similar, manner that it interacts with the RAN 105.

The PCF 184 may be connected to the SMF 174 via an N7 interface, connected to the AMF 172 via an N15 interface, and to an Application Function (AF) 188 via an N5 interface. The N15 and N5 interfaces are not shown in Figure 1D. The PCF 184 may provide policy rules to control plane nodes such as the AMF 172 and SMF 174, allowing the control plane nodes to enforce these rules. The PCF 184 may send policies to the AMF 172 for the WTRUs 102a, 102b, and 102c so that the AMF may deliver the policies to the WTRUs 102a, 102b, and 102c via an N1 interface. Policies may then be enforced, or applied, at the WTRUs 102a, 102b, and 102c.

The UDR 178 may act as a repository for authentication credentials and subscription information. The UDR may connect to network functions, so that network function can add to, read from, and modify the data that is in the repository. For example, the UDR 178 may connect to the PCF 184 via an N36 interface. Similarly, the UDR 178 may connect to the NEF 196 via an N37 interface, and the UDR 178 may connect to the UDM 197 via an N35 interface.

The UDM 197 may serve as an interface between the UDR 178 and other network functions. The UDM 197 may authorize network functions to access of the UDR 178. For example, the UDM 197 may connect to the AMF 172 via an N8 interface, the UDM 197 may connect to the SMF 174 via an N10 interface. Similarly, the UDM 197 may connect to the AUSF 190 via an N13 interface. The UDR 178 and UDM 197 may be tightly integrated.

The AUSF 190 performs authentication related operations and connects to the UDM 178 via an N13 interface and to the AMF 172 via an N12 interface.

The NEF 196 exposes capabilities and services in the 5G core network 109 to Application Functions (AF) 188. Exposure may occur on the N33 API interface. The NEF may connect to an AF 188 via an N33 interface and it may connect to other network functions in order to expose the capabilities and services of the 5G core network 109.

Application Functions 188 may interact with network functions in the 5G Core Network 109. Interaction between the Application Functions 188 and network functions may be via a direct interface or may occur via the NEF 196. The Application Functions 188 may be considered part of the 5G Core Network 109 or may be external to the 5G Core Network 109 and deployed by enterprises that have a business relationship with the mobile network operator.

Network Slicing is a mechanism that could be used by mobile network operators to support one or more 'virtual' core networks behind the operator's air interface. This involves 'slicing' the core network into one or more virtual networks to support different RANs or different service types running across a single RAN. Network slicing enables the operator to create networks customized to provide optimized solutions for different market scenarios which demands diverse requirements, e.g. in the areas of functionality, performance and isolation.

3GPP has designed the 5G core network to support Network Slicing. Network Slicing is a good tool that network operators can use to support the diverse set of 5G use cases (e.g., massive IoT, critical communications, V2X, and enhanced mobile broadband) which demand very diverse and sometimes extreme requirements. Without the use of network slicing techniques, it is likely that the network architecture would not be flexible and scalable enough to efficiently support a wider range of use cases need when each use case has its own specific set of performance, scalability, and availability requirements. Furthermore, introduction of new network services should be made more efficient.

Referring again to Figure 1D, in a network slicing scenario, a WTRU 102a, 102b, or 102c may connect to an AMF 172, via an N1 interface. The AMF may be logically part of one or more slices. The AMF may coordinate the connection or communication of WTRU 102a, 102b, or 102c with one or more UPF 176a and 176b, SMF 174, and other network functions. Each of the UPFs 176a and 176b, SMF 174, and other network functions may be part of the same slice or different slices. When they are part of different slices, they may be isolated from each other in the sense that they may utilize different computing resources, security credentials, etc.

The core network 109 may facilitate communications with other networks. For example, the core network 109 may include, or may communicate with, an IP gateway, such as an IP Multimedia Subsystem (IMS) server, that serves as an interface between the 5G core network 109 and a PSTN 108. For example, the core network 109 may include, or communicate with a short message service (SMS) service center that facilities communication via the short message service. For example, the 5G core network 109 may facilitate the exchange of non-IP data packets between the WTRUs 102a, 102b, and 102c and servers or applications functions 188. In addition, the core network 170 may provide the WTRUs 102a, 102b, and 102c with access to the networks 112, which may include other wired or wireless networks that are owned and/or operated by other service providers.

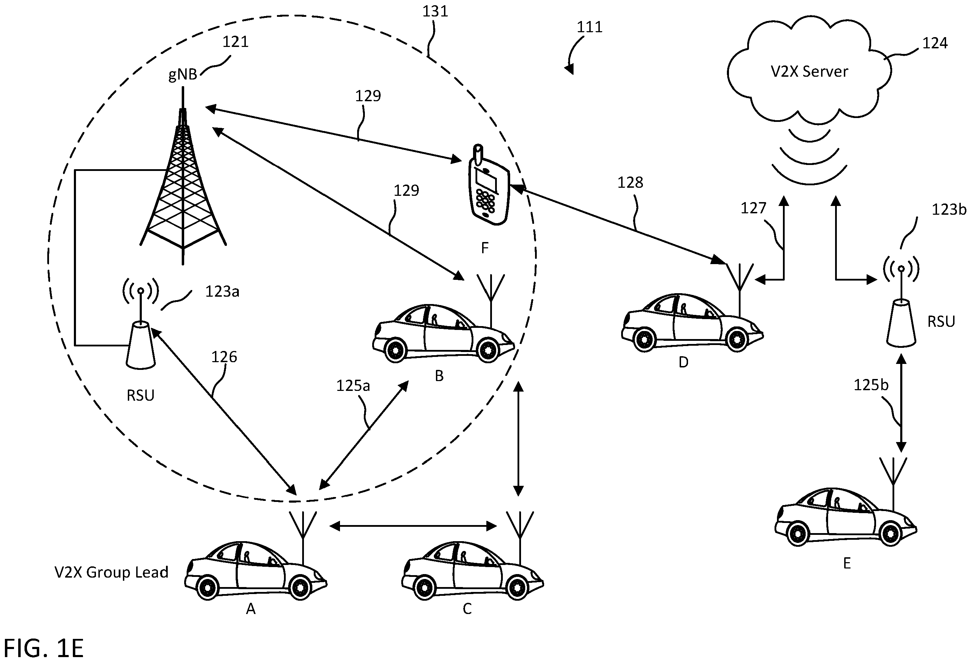

The core network entities described herein and illustrated in Figures 1A, 1C, 1D, and 1E are identified by the names given to those entities in certain existing 3GPP specifications, but it is understood that in the future those entities and functionalities may be identified by other names and certain entities or functions may be combined in future specifications published by 3GPP, including future 3GPP NR specifications. Thus, the particular network entities and functionalities described and illustrated in Figures 1A, 1B, 1C, 1D, and 1E are provided by way of example only, and it is understood that the subject matter disclosed and claimed herein may be embodied or implemented in any similar communication system, whether presently defined or defined in the future.

Figure 1E illustrates an example communications system 111 in which the systems, methods, apparatuses described herein may be used. Communications system 111 may include Wireless Transmit/Receive Units (WTRUs) A, B, C, D, E, F, a base station gNB 121, a V2X server 124, and Roadside Units (RSUs) 123a and 123b. In practice, the concepts presented herein may be applied to any number of WTRUs, base station gNBs, V2X networks, and/or other network elements. One or several or all WTRUs A, B, C, D, E, and F may be out of range of the access network coverage 131. WTRUs A, B, and C form a V2X group, among which WTRU A is the group lead and WTRUs B and C are group members.

WTRUs A, B, C, D, E, and F may communicate with each other over a Uu interface 129 via the gNB 121 if they are within the access network coverage 131. In the example of Figure 1E, WTRUs B and F are shown within access network coverage 131. WTRUs A, B, C, D, E, and F may communicate with each other directly via a Sidelink interface (e.g., PC5 or NR PC5) such as interface 125a, 125b, or 128, whether they are under the access network coverage 131 or out of the access network coverage 131. For instance, in the example of Figure 1E, WRTU D, which is outside of the access network coverage 131, communicates with WTRU F, which is inside the coverage 131.

WTRUs A, B, C, D, E, and F may communicate with RSU 123a or 123b via a Vehicle-to-Network (V2N) 133 or Sidelink interface 125b. WTRUs A, B, C, D, E, and F may communicate to a V2X Server 124 via a Vehicle-to-Infrastructure (V2I) interface 127. WTRUs A, B, C, D, E, and F may communicate to another UE via a Vehicle-to-Person (V2P) interface 128.

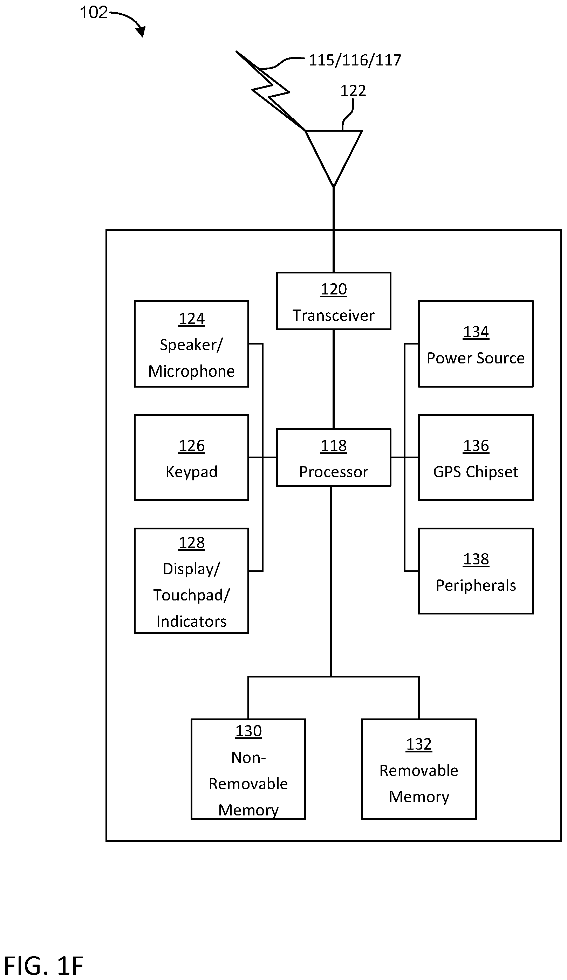

Figure 1F is a block diagram of an example apparatus or device WTRU 102 that may be configured for wireless communications and operations in accordance with the systems, methods, and apparatuses described herein, such as a WTRU 102 of Figure 1A, 1B, 1C, 1D, or 1E. As shown in Figure 1F, the example WTRU 102 may include a processor 118, a transceiver 120, a transmit/receive element 122, a speaker/microphone 124, a keypad 126, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements. Also, the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, a next generation node-B (gNode-B), and proxy nodes, among others, may include some or all of the elements depicted in Figure 1F and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1F depicts the processor 118 and the transceiver 120 as separate components, it will be appreciated that the processor 118 and the transceiver 120 may be integrated together in an electronic package or chip.

The transmit/receive element 122 of a UE may be configured to transmit signals to, or receive signals from, a base station (e.g., the base station 114a of Figure 1A) over the air interface 115/116/117 or another UE over the air interface 115d/116d/117d. For example, the transmit/receive element 122 may be an antenna configured to transmit and/or receive RF signals. The transmit/receive element 122 may be an emitter/detector configured to transmit and/or receive IR, UV, or visible light signals, for example. The transmit/receive element 122 may be configured to transmit and receive both RF and light signals. It will be appreciated that the transmit/receive element 122 may be configured to transmit and/or receive any combination of wireless or wired signals.

In addition, although the transmit/receive element 122 is depicted in Figure 1F as a single element, the WTRU 102 may include any number of transmit/receive elements 122. More specifically, the WTRU 102 may employ MIMO technology. Thus, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, for example NR and IEEE 802.11 or NR and E-UTRA, or to communicate with the same RAT via multiple beams to different RRHs, TRPs, RSUs, or nodes.

The processor 118 of the WTRU 102 may be coupled to, and may receive user input data from, the speaker/microphone 124, the keypad 126, and/or the display/touchpad/indicators 128 (e.g., a liquid crystal display (LCD) display unit or organic light-emitting diode (OLED) display unit. The processor 118 may also output user data to the speaker/microphone 124, the keypad 126, and/or the display/touchpad/indicators 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. The processor 118 may access information from, and store data in, memory that is not physically located on the WTRU 102, such as on a server that is hosted in the cloud or in an edge computing platform or in a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries, solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method.

The processor 118 may further be coupled to other peripherals 138, which may include one or more software and/or hardware modules that provide additional features, functionality, and/or wired or wireless connectivity. For example, the peripherals 138 may include various sensors such as an accelerometer, biometrics (e.g., finger print) sensors, an e-compass, a satellite transceiver, a digital camera (for photographs or video), a universal serial bus (USB) port or other interconnect interfaces, a vibration device, a television transceiver, a hands free headset, a Bluetooth^{®} module, a frequency modulated (FM) radio unit, a digital music player, a media player, a video game player module, an Internet browser, and the like.

The WTRU 102 may be included in other apparatuses or devices, such as a sensor, consumer electronics, a wearable device such as a smart watch or smart clothing, a medical or eHealth device, a robot, industrial equipment, a drone, a vehicle such as a car, truck, train, or an airplane. The WTRU 102 may connect to other components, modules, or systems of such apparatuses or devices via one or more interconnect interfaces, such as an interconnect interface that may comprise one of the peripherals 138.

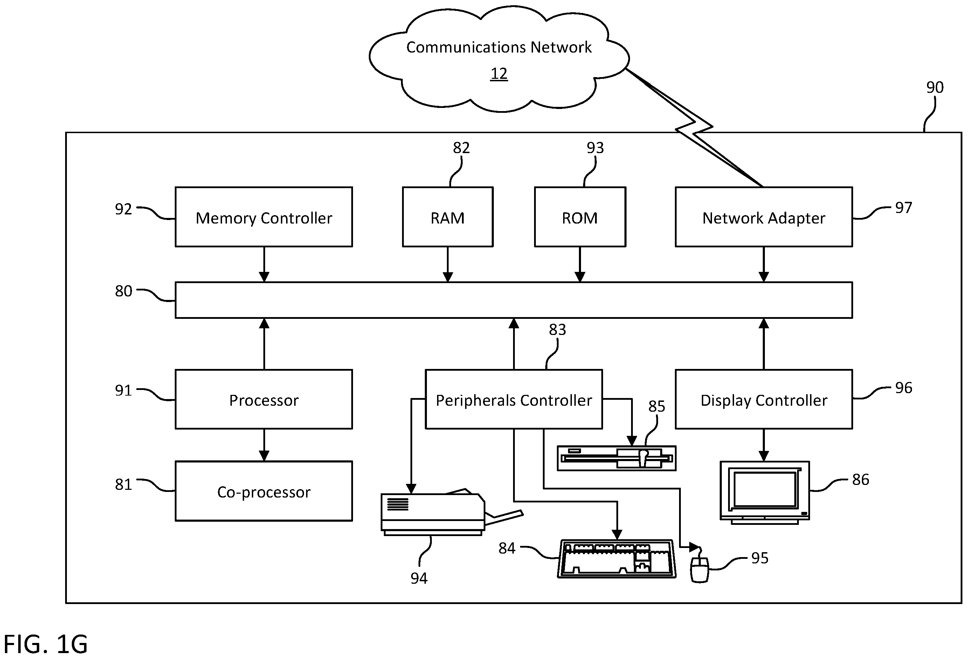

Figure 1G is a block diagram of an exemplary computing system 90 in which one or more apparatuses of the communications networks illustrated in Figures 1A, 1C, 1D and 1E may be embodied, such as certain nodes or functional entities in the RAN 103/104/105, Core Network 106/107/109, PSTN 108, Internet 110, Other Networks 112, or Network Services 113. Computing system 90 may comprise a computer or server and may be controlled primarily by computer readable instructions, which may be in the form of software, wherever, or by whatever means such software is stored or accessed. Such computer readable instructions may be executed within a processor 91, to cause computing system 90 to do work. The processor 91 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 91 may perform signal coding, data processing, power control, input/output processing, and/or any other functionality that enables the computing system 90 to operate in a communications network. Coprocessor 81 is an optional processor, distinct from main processor 91, that may perform additional functions or assist processor 91. Processor 91 and/or coprocessor 81 may receive, generate, and process data related to the methods and apparatuses disclosed herein.

In operation, processor 91 fetches, decodes, and executes instructions, and transfers information to and from other resources via the computing system's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 may be read or changed by processor 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 90 may contain peripherals controller 83 responsible for communicating instructions from processor 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. The visual output may be provided in the form of a graphical user interface (GUI). Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain communication circuitry, such as for example a wireless or wired network adapter 97, that may be used to connect computing system 90 to an external communications network or devices, such as the RAN 103/104/105, Core Network 106/107/109, PSTN 108, Internet 110, WTRUs 102, or Other Networks 112 of Figures 1A, 1B, 1C, 1D, and 1E, to enable the computing system 90 to communicate with other nodes or functional entities of those networks. The communication circuitry, alone or in combination with the processor 91, may be used to perform the transmitting and receiving steps of certain apparatuses, nodes, or functional entities described herein.

It is understood that any or all of the apparatuses, systems, methods and processes described herein may be embodied in the form of computer executable instructions (e.g., program code) stored on a computer-readable storage medium which instructions, when executed by a processor, such as processors 118 or 91, cause the processor to perform and/or implement the systems, methods and processes described herein. Specifically, any of the steps, operations, or functions described herein may be implemented in the form of such computer executable instructions, executing on the processor of an apparatus or computing system configured for wireless and/or wired network communications. Computer readable storage media includes volatile and nonvolatile, removable and non-removable media implemented in any non-transitory (e.g., tangible or physical) method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which may be used to store the desired information, and which may be accessed by a computing system.

### Multi-carrier Scheduling and Operation for NR Sidelink

Solutions proposed herein may be applied to NR sidelink multi-carrier operations with both resource allocation mode 1 and mode 2. For NR sidelink multi-carrier operations resource mode 1, downlink control information (DCI) and sidelink control information (SCI) may be applied for NR sidelink multi-carrier operations. For NR sidelink multi-carrier operations resource mode 2, SCI may be applied. DCI for NR sidelink multi-carrier operations. For NR sidelink multi-carrier operations, DCI may be carried in physical downlink control channel (PDCCH) via Uu interface and SCI may be carried in physical sidelink control channel (PSCCH) and physical sidelink shared channel (PSSCH) via sidelink PC5 interface.

One solution may use explicit cross scheduling for multi-carrier in NR V2X with sidelink. A sidelink (SL) carrier indicator, SL carrier group indicator, SL carrier index or SL carrier group index may be used for cross carrier and cross carrier group scheduling in multi-carrier based sidelink operation.

Another solution may use implicit cross carrier scheduling for multi-carrier in NR V2X with sidelink. Implicit carrier scheduling may use resources, resource partitioning, multiple resource pools or resource pool partitioning for enabling NR sidelink cross carrier and carrier group scheduling. For example, multiple resource pools may be used. Each resource pool may be associated with a carrier or a carrier group. Alternatively, resource pool partitioning may be used. A resource pool may be partitioned into several partitions and each partition may be associated with a SL component carrier (CC) or a SL CC group (CCG).

Alternatively, the SL carrier or the SL carrier group may be associated with the PSCCH configuration, e.g., may be associated with the PSCCH configuration index. For example, within one sidelink resource pool configuration, a UE may be configured with multiple PSCCH configurations which may be associated with the PSCCH resources in different CCs or in different CCGs. The association may be configured or pre-configured. For example, PSCCH config 1 may be always associated with SL CC 1 or SL CCG 1, etc. Or, it may be configured that PSCCH config 1 is associated with SL CC 2 or SL CCG 3, etc. When a UE detects the SCI transmitted on the PSCCH resource, the UE determines the SL CC or the SL CCG that the PSCCH is cross scheduled for. An example of the *SL-ResourcePool* configuration is shown in Code Example 1 of the Appendix.

The terms CC and SL CC may be used interchangeably. Similarly, CCG and SL CCG may be used interchangeably.

Yet another solution may use hierarchical two-level scheduling. Level one scheduling may perform cross carrier group scheduling which perform cross carrier scheduling at CC group level. The second level scheduling may perform cross carrier scheduling within a CC group. Cross carrier scheduling within a CC group may perform cross carrier scheduling at CC level. That is, CC level cross carrier scheduling may be performed within a cross scheduled CC group.

One method may use combination of explicit and implicit cross scheduling and indication. One approach may use implicit cross carrier group scheduling for a group of CCs and use explicit cross carrier scheduling for a specific CC within the cross scheduled CC group.

Another approach may use explicit cross carrier group scheduling for a group of CCs and use implicit cross carrier scheduling for a specific CC within the cross scheduled CC group. One solution may use resources, resource pools or resource pool partitions to be associated with a group of CCs and use carrier indicator or carrier index for cross scheduling a specific CC within the cross scheduled CC group.

Sidelink multi-carrier, carrier aggregation (CA), CCs and/or CCGs may be configured for UEs for sidelink via RRC signaling by network (NW) and/or gNB. Alternatively, sidelink multi-carrier, carrier aggregation (CA), CCs and/or CCGs may be configured for UEs for sidelink via PC5-RRC signaling by another UE, NW and/or gNB. Another UE may be a another sidelink UE, a group manager or group leader, platoon leader, cluster head, or the like.

Inter-UE coordination for multi-carrier operation may also be possible via assistance signaling or assistance information from another sidelink UE, a group manager or group leader, platoon leader, cluster head, or the like. Assistance signaling or assistance information may also be conveyed and communicated for resource scheduling, resource allocation, carrier scheduling and assignment, carrier activation/deactivation for SL multi-carrier operation between UEs, e.g., between transmitting UE and receiving UEs. Carriers may be activated or deactivated via sidelink PSCCH and/or PSSCH (e.g., 1^{st} stage SCI, 2^{nd} stage SCI), sidelink MAC or MAC control element (CE), PC5-MAC, or the like.

Another solution may use carrier group indicator or carrier group index for cross carrier group scheduling for a group of CCs and use resources, resource pools or resource pool partitions to be associated with a specific CC within the cross scheduled CC group. For example, explicit indication may use carrier indication field (CIF) or carrier group indication field (CGIF). Implicit indication may use index of resources, index of resource pools or index of resource pool partitions.

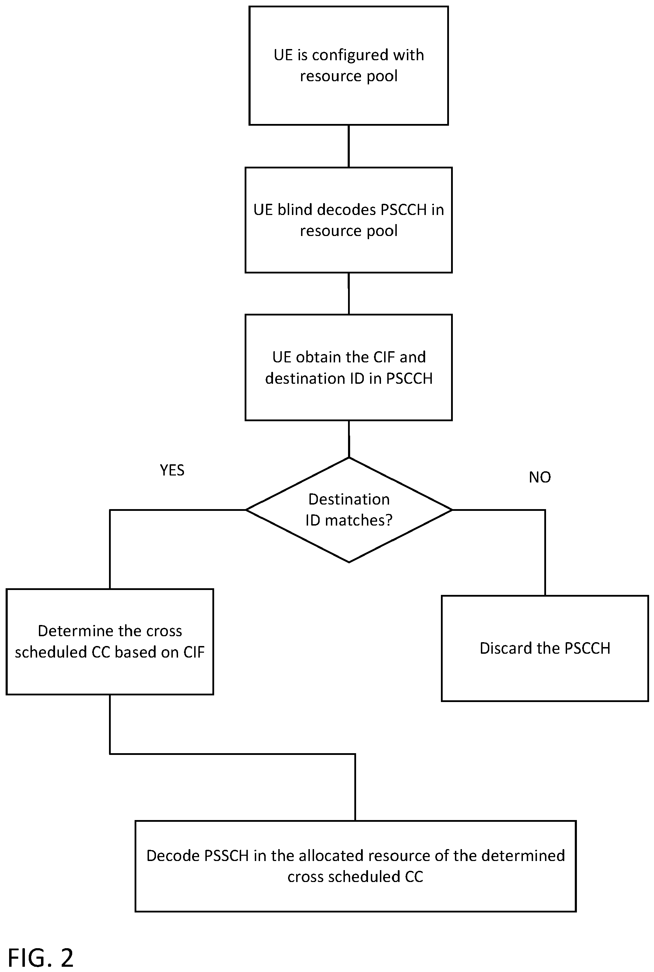

An example method of cross carrier scheduling for multi-carrier NR V2X with Sidelink using CIF is depicted in Figure 2.

A UE may be configured with a resource pool in a primary carrier or anchor CC in multi-carrier sidelink. The UE may also be configured e.g., via RRC configuration by gNB, with a CIF for SCI format which indicates, for example, the presence or absence of CIF for SCI format such as SCI format 1-A. The configured CIF may be used to enable cross carrier scheduling. Configuration for CIF presence or absence for SCI may also be performed by a UE that manages another UE or a group of UEs, e.g., via PC5-RRC or other signaling.

The UE may perform blind decoding for the PSCCH in the resource pool that is configured. The UE may obtain the carrier index or carrier indication (CI) in CIF and destination ID in the PSCCH that is successfully decoded. For example, the CIF may be carried by the 1^{st} stage SCI and the destination ID may be carried in the 2^{nd} stage SCI.

The UE may check the destination ID in destination ID field to determine whether the destination ID matches or not. The destination ID may be carried in destination ID field in the second stage SCI.

If destination ID matches, the UE may determine the CC based on the value of CIF in decoded PSCCH. The UE may determine the cross-scheduled CC based on the CI in CIF. The destination ID may be a L1 destination ID which may be carried in the 2^{nd} stage SCI.

The UE may decode PSSCH in the allocated resource of the determined cross scheduled CC based on PSCCH.

If destination ID does not match, the UE may discard the PSCCH.

An example mapping between the CCs and CIF in Primary Carrier is shown in Table 1 of the Appendix. CIF in SCI Format is carried in PSCCH in Primary Carrier. The example shows eight CCs via Carrier Index Field or Carrier Indication Field (CIF). The i-th CC is mapped to the value of CIF with one-to-one mapping in the system.

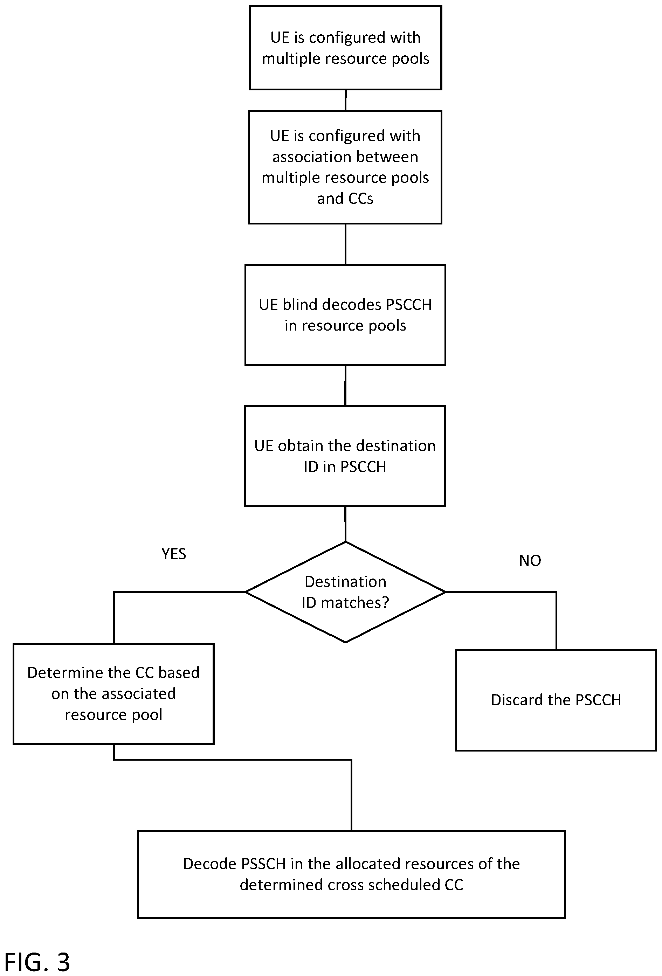

An example method of cross carrier scheduling for multi-carrier NR V2X sidelink using multiple resource pools is depicted in Figure 3.

A UE may be configured with multiple resource pools in primary carrier or anchor CC. The UE may also be configured with an association between multiple resource pools and CCs. The configured association between resource pools and CCs may be used to enable cross carrier scheduling. The association between multiple resource pools and CCs may be configured via RRC signaling such as dedicated RRC signaling or common RRC signaling such as system information.

The UE may blindly decode the PSCCH in each of the resource pools. The UE may obtain the destination ID in the PSCCH that is successfully decoded.

The UE may check the destination ID matches the UE. For example, when the destination ID obtained in SCI is the same as the destination ID configured for the UE, the UE may determine that the destination ID matches.

If destination ID matches, the UE may determine the CC based on the resource pool where PSCCH is successfully decoded. The UE may determine the cross scheduled CC based on the association between CC and resource pool.

The UE may decode PSSCH in the allocated resource of the determined cross scheduled CC.

If the destination ID does not match, the UE may discard the PSCCH.

An example association between the CCGs and multiple Resource Pools is shown in Table 2 of the Appendix. The example shows that eight Resource Pools are associated with eight CCs via Resource Pool Index. The i-th Resource Pool corresponds to the Resource Pool Index i which is associated with CC i in the system. Resource Pool Index i has one-to-one association with CC i.

Alternatively, the association may be between the PSCCH configuration index and the CC index. For example, PSCCH configuration index i has one-to-one association with CC i as shown in Table 3 of the Appendix.

The association for the PSCCH configuration index may be extended to CCG. The association between the PSCCH configuration index and the CCG or CCG index may also be used.

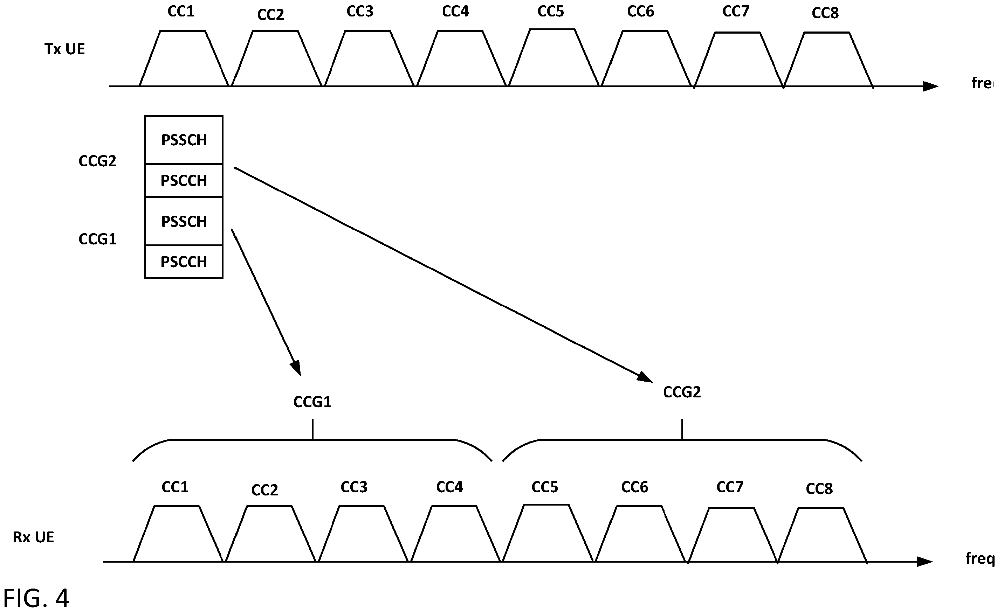

A multi-carrier cross scheduling for NR sidelink is depicted in Figure 4. For example, assume that there are Kc CCs which may be divided into Kg CC groups (CCG). Each CCG has Kcg = Kc/Kg CCs. That is, there are Kcg CCs per CCG. Any CC may be configured to be a primary carrier or anchor CC in the sidelink system. For example, CC1 may be configured to be the anchor CC and serve as the primary carrier. The primary carrier or anchor CC may perform cross carrier scheduling for all the CCs. That is, CC1 may cross schedule all CCs, namely, CC1, CC2, CC3, ..., CC8 in the sidelink system. As shown in Figure 4, this example shows that Kc = 8 CCs, Kg = 2 CCGs and there are Kcg = 4 CCs per CCG.

The number of CCs per CCG may be the same or different. The CC group size (CCG size) may be the same or different.

CIF with N_cif bits may be used in primary carrier, say CC1 for example. With N_cif bits, primary carrier CC1 may cross schedule up to 2^N_cif CCs. In case of N_cif = 3 bits, CC1 may cross schedule up to eight CCs. In case of N_cif = 4 bits, primary carrier may cross schedule up to sixteen CCs. In case of N_cif = 5 bits, primary carrier may cross schedule up to thirty-two CCs, and so on.

Another solution may be to divide CCs into groups. Here we may refer to such group as a CC group, or CCG. The primary carrier CC1 may cross schedule Kg CCG and Kc CCs within each CCG. Resources in the primary carrier may be partitioned into Kg partitions. Each resource partition may be associated with each CCG. The primary carrier CC1 may cross schedule CCG using resource partitioning. This may be achieved by transmitting PSCCH in the resource partition corresponding to the desired CCG. For example, resource partition j may be associated with CCG j.

The PSCCH may be transmitted in resource partition j of primary CC, say CC1, to schedule the associated PSSCH for CCG j. To further schedule a specific CC within a CCG j, a CIF may be carried in PSCCH. Log2(Kcg) bits may be used for CIF in PSCCH to indicate a specific CC in that CCG. In case of Kcg = 4, 2 bits may be used for CIF in PSCCH to indicate a specific CC in that CCG. This is shown in the example in Figure 4. In case of Kcg = 2, one bit may be used for CIF in PSCCH to indicate a specific CC in that CCG.

The UE may try to blind decode the PSCCH in each resource partition. If the UE decodes the PSCCH in j-th resource partition, the UE may determine that this PSCCH is for the j-th CCG. When the UE obtains the CIF carried in PSCCH, the UE may determine the specific CC within the CCG to further decode the PSSCH.

Regarding resources such as subchannels and/or resource pools for PSCCH and/or PSSCH is shown in Figure 4, a primary carrier such as CC1 on the Tx UE side may represent resources, resource pools, resource partitioning, or resource pool partitioning for PSCCH and/or PSSCH. Resources, resource pools, and/or resource partitioning. A resource pool partitioning for PSCCH may be used if the 1st stage SCI is used, for example. Resources, resource pools, resource partitioning, or resource pool partitioning for PSSCH may not be used if the 1st stage SCI is used. The 1st stage SCI is carried in PSCCH. Resources, resource pools, resource partitioning, or resource pool partitioning for PSSCH may be used if 2nd stage SCI is used. The 2nd stage SCI may be carried in PSSCH.

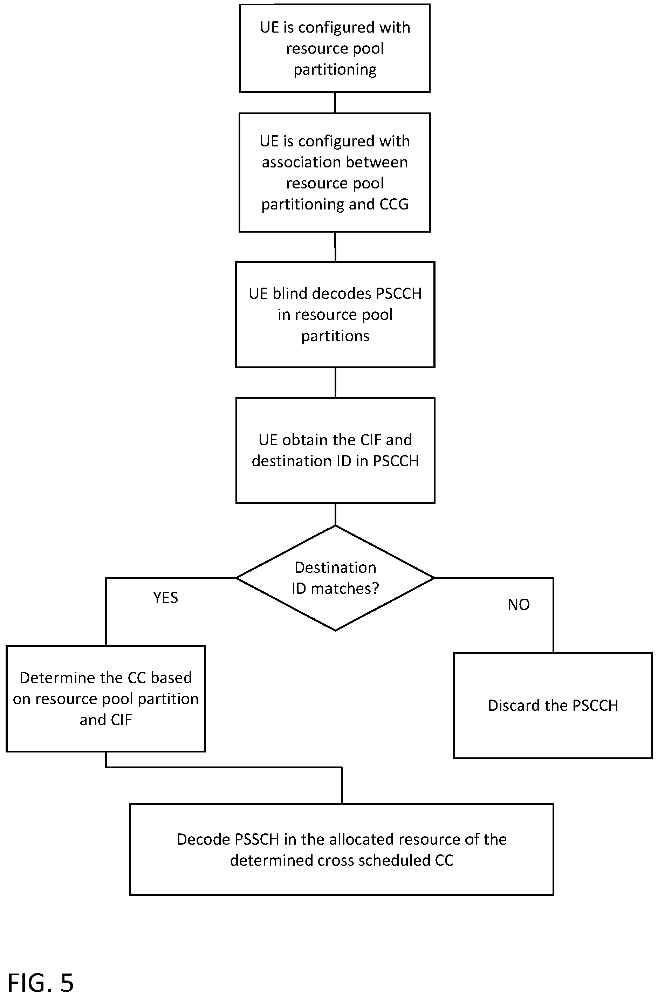

An example method of cross carrier scheduling for multi-carrier NR V2X with sidelink is depicted in Figure 5.

The UE may be configured with resource pool partitioning. The UE may also be configured with an association between resource pool partitioning and CCGs. The association between resource pool partitions and CCGs may be configured via RRC signaling such as dedicated RRC signaling or common RRC signaling such as system information.

The configured association between resource pool partitioning and CCG may be used to enable cross carrier group scheduling.

The UE may blind decode the PSCCH in each of resource pool partitions. The UE may obtain the CI in CIF and destination ID in the decoded PSCCH.

The UE may check whether the destination ID matches the UE.

The UE may first determine the CCG based on the association between a CCG and a resource pool partition. Then UE may determine the CC within the determined CCG based on the CI in CIF. The UE may determine the number of bits for the CI in CIF after determining the CCG index. The maximum number bits for CIF may be specified or predefined based on the maximum number of CCs per CCG that may be configured. The actual bit size for the relevant values of CI may be determined based on the CCs per CCG that are actually configured per CCG.

If the destination ID matches, the UE may determine the CC based on resource pool partition where PSCCH is decoded and CIF is obtained in the decoded PSCCH in the corresponding resource pool partition.

The UE may decode the PSSCH in the allocated resource of the determined cross scheduled CC.

If the destination ID does not match, the UE may discard the PSCCH.

An example association between the CCGs and resource pool partitions is shown in Table 4 of the Appendix. The example shows four resource pool partitions are associated with four CCGs via a resource pool partition index. The i-th resource pool partition corresponds to the resource pool partition index i which is associated with CCG i.

An example mapping between the CCs within CCG and CI in CIF is shown in Table 5 of the Appendix. Four component carriers CC1 - CC4 are mapped to values of CI 1 - 4 respectively, which are mapped to bits 00, 01, 10, 11 correspondingly.

Another example method of cross carrier scheduling for multi-carrier NR V2X Sidelink is depicted in Figure 6.

The UE may be configured with resource pool partitioning. The UE may also be configured with an association between resource pool partitioning and CC within a CCG. The configured association between resource pool partitioning and CC within CCG may be used to enable cross carrier scheduling within the same CCG.

The UE may blind decode the PSCCH in each of resource pool partitions. The UE may obtain the CGIF and destination ID in the decoded PSCCH.

The UE may check whether the destination ID matches the UE.

The UE may first determine the CCG based on the value of CGI in CGIF. Then UE may determine the desired CC within CCG based on the association between CCs and resource pool partitions.

If destination ID matches, the UE may determine the CC based on resource pool partition where PSCCH is decoded and CGIF that is obtained in the decoded PSCCH in the resource pool partition.

The UE may decode PSSCH in the allocated resource of the determined cross scheduled CC.

If destination ID does not match, the UE may discard the PSCCH.

An example mapping between the CCGs and CGI in CGIF is shown in Table 6 of the Appendix. Four component carrier groups CCG1 - CCG4 are mapped to CGI 1 - 4 respectively, which are mapped to bits 00, 01, 10, 11 correspondingly.

An example association between the CCs and resource pool partitions is shown in Table 7 of the Appendix. The example shows that four resource pool partitions are associated with four CCs via resource pool partition index. The i-th resource pool partition corresponds to the resource pool partition index i which is associated with CC i within a CCG.

A Carrier Group Indicator Field (CGIF) may be used to assign the CCG, a resource partition may be used to indicate the CC within the CCG. For example, to schedule a third CC in a second CCG, a CGIF may carry an indicator indicating the second CCG. The CGIF may be carried in a PSCCH transmitted in the third resource partition of primary carrier.

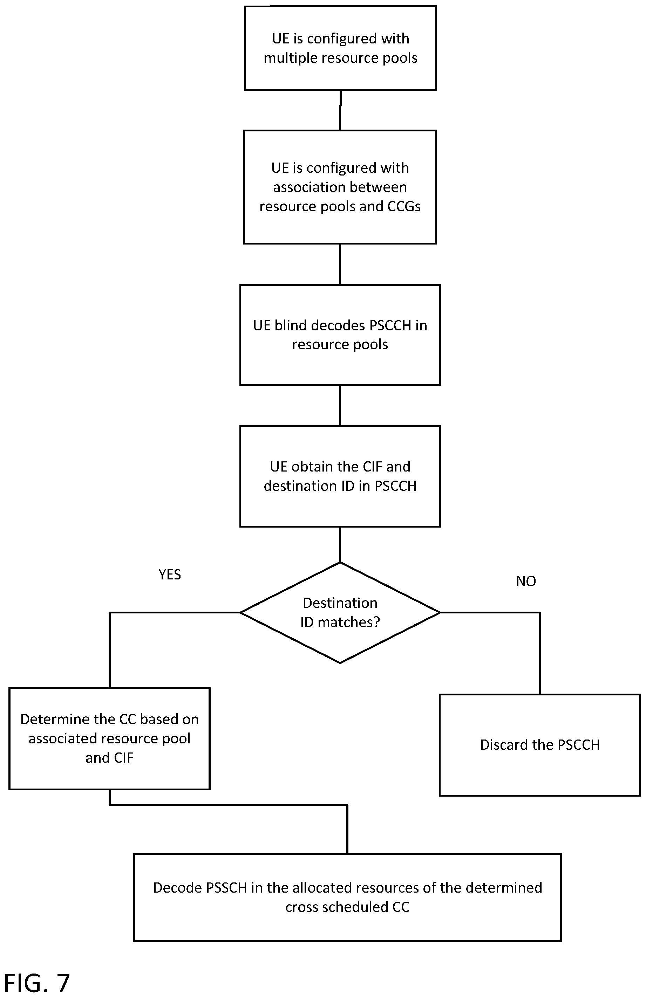

An example method of cross carrier scheduling for multi-carrier NR V2X Sidelink with Multiple Resource Pools is depicted in Figure 7.

The UE may be configured with multiple resource pools. The UE may also be configured with an association between the multiple resource pools and CCGs. The configured association between multiple resource pools and CCGs may be used to enable cross carrier group scheduling.

The UE may blind decode the PSCCH in each of the resource pools. The UE may obtain the CI in CIF and the destination ID in the decoded PSCCH.

The UE may check whether the destination ID matches the UE. If destination ID matches, the UE may determine the CC based on resource pool where PSCCH is decoded and CIF that is obtained in the decoded PSCCH in the corresponding resource pool.

The UE may first determine the CCG based on the association between CCG and resource pool. Then the UE may determine the CC within the determined CCG based on the CI in CIF.

The UE may decode PSSCH in the allocated resource of the determined cross scheduled CC. If the destination ID does not match, the UE may discard the PSCCH.

An example association between the CCGs and multiple resource pool is shown in Table 8 of the Appendix. Table 8 shows four resource pools associated with four CCGs via a resource pool index. The i-th resource pool corresponds to the resource pool index i which is associated with CCG i.

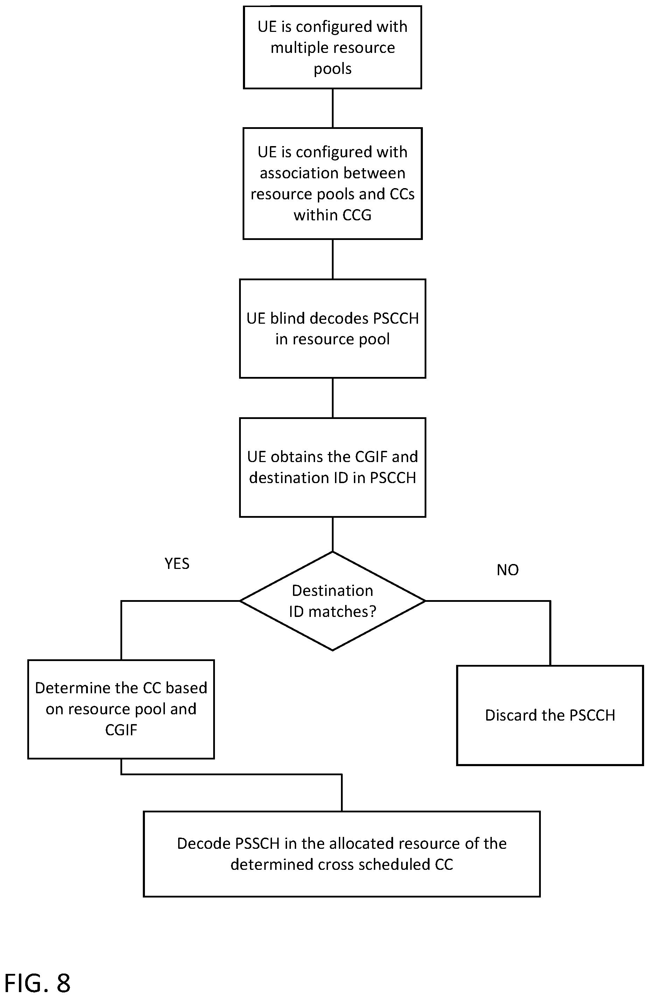

Another method of cross carrier scheduling for multi-carrier NR V2X Sidelink with multiple resource pools is depicted in Figure 8.

The UE may be configured with multiple resource pools. The UE may also be configured with an association between multiple resource pools and CCs within a CCG. The configured association between multiple resource pools and CCs within a CCG may be used to enable cross carrier scheduling within a CCG.

The UE may blind decode the PSCCH in multiple resource pools. The UE may obtain the CGIF and destination ID in the decoded PSCCH.

The UE may check whether the destination ID matches the UE.

If destination ID matches, the UE may determine the CC based on resource pool index where PSCCH is decoded and CGIF that is obtained in the decoded PSCCH in the corresponding resource pool.

The UE may first determine the CCG based on CGI in CGIF. Then the UE may determine the CC within a CCG based on the association between CC and multiple resource pools.

The UE may decode PSSCH in the allocated resource of the determined cross scheduled CC. If the destination ID does not match, the UE may discard the PSCCH.

An example association between the CCGs and multiple resource pools is shown in Table 9 of the Appendix. The example shows that four resource pools are associated with four CCs within a CCG via a resource pool index. The i-th resource pool corresponds to the resource pool index i which is associated with CC i within a CCG.

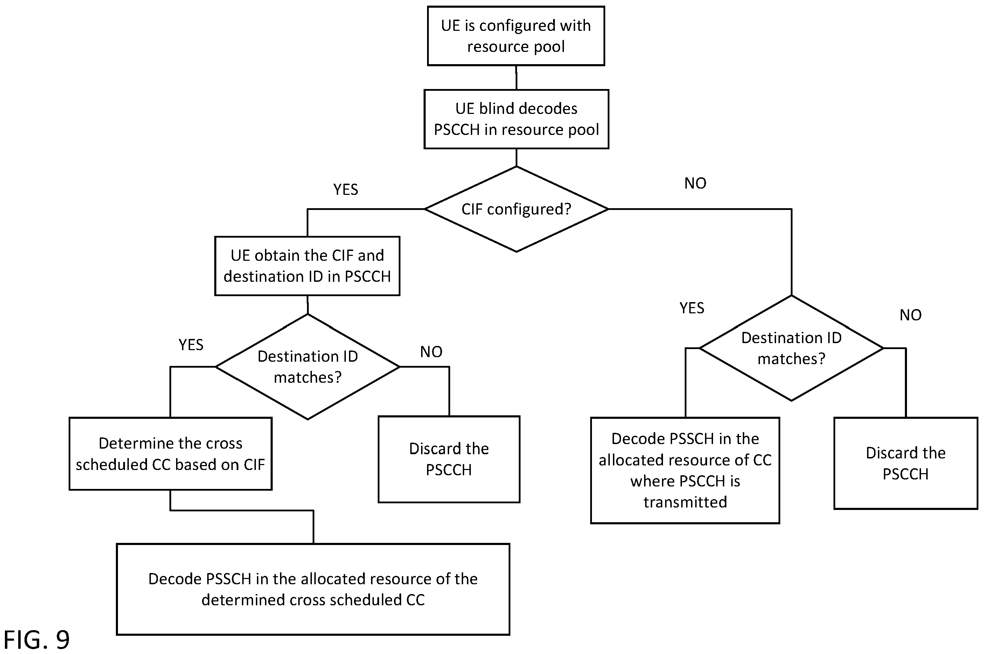

An example method of cross carrier scheduling for multi-carrier NR V2X Sidelink with and without CIF or CGIF configured is depicted in Figure 9.

The UE may be configured with a resource pool in a primary carrier or an anchor CC. The UE may or may not be configured with a CIF in SCI format e.g., SCI format 1-A. If a CIF is not configured in SCI format in PSCCH, then same carrier scheduling may be used. If CIF is configured in SCI format in PSCCH, then cross carrier scheduling may be used. The configured CIF may be used to enable cross carrier scheduling.

The UE may blind decode the PSCCH in the resource pool. If CIF is configured in SCI format in PSCCH, then UE may obtain the CI in CIF and destination ID in the decoded PSCCH.

The UE may check whether the destination ID matches the UE. If the destination ID matches, the UE may determine the CC based on the CIF in decoded PSCCH. The UE may determine the cross scheduled CC based on the CI in CIF. The UE may decode PSSCH in the allocated resource of the determined cross scheduled CC based on PSCCH. If destination ID does not match, the UE may discard the PSCCH.

If CIF is not configured in SCI format in PSCCH, then the UE may decode PSCCH and may check the destination ID in SCI format - whether the destination ID matches or not. If the destination ID matches, the UE may determine the CC based on the same CC where PSCCH is decoded. The UE may decode PSSCH in the allocated resource of the determined CC based on PSCCH. If the destination ID does not match, the UE may discard the PSCCH.

For NR sidelink resource allocation mode 1 or mode 2, upon the detection of SCI format 1-A on PSCCH, a UE may decode PSSCH according to the detected SCI formats 2-A and 2-B, and associated PSSCH resource configuration configured by higher layers.

For NR sidelink resource allocation mode 1, a UE may decode DCI in PDCCH and obtain the CIF or CGIF in DCI format 3_0. The UE may pass the CIF or CGIF in DCI format 3_0 to SCI. Such cross carrier scheduling information may be carried in the 1^{st} stage SCI. Alternatively, cross carrier scheduling information may be carried in the 2^{nd} stage SCI. CIF or CGIF may be included in DCI format 3_0 and sidelink-CIF (SL-CIF) or sidelink-CGIF (SL-CGIF) may be included in SCI format (e.g., SCI format 1-A, SCI format 2-A, or SCI-format 2-B). This may be used for NR sidelink resource allocation mode 1. Inclusion of sidelink-CIF (SL-CIF) or sidelink-CGIF (SL-CGIF) in SCI format 1-A and/or SCI format 2-A may be used for unicast, groupcast and/or broadcast. Inclusion of sidelink-CIF (SL-CIF) or sidelink-CGIF (SL-CGIF) in SCI format 2-B may be used for groupcast for NACK-only operation

For NR sidelink resource allocation mode 2, the UE may directly perform cross carrier scheduling autonomously for multi-carrier NR sidelink communications. Sensing may be performed for each carrier including primary carrier. An SL-CIF or SL-CGIF may be included in SCI format. The SL-CIF or SL-CGIF may be included in SCI format 1-A for multi-carrier NR sidelink communications. Alternatively, the SL-CIF or SL-CGIF may be included in SCI format 2-A or SCI format 2-B for multi-carrier NR sidelink communications. This may be used for NR sidelink groupcast. Inclusion of sidelink-CIF (SL-CIF) or sidelink-CGIF (SL-CGIF) in SCI format 1-A and/or SCI format 2-A may be used for unicast, groupcast and/or broadcast. Inclusion of an SL-CIF or SL-CGIF in SCI format 2-B may be used for groupcast for NACK-only operation.

The destination ID may be a Layer 1 destination ID. Alternatively, the destination ID may be a Layer 2 destination ID. If destination ID is a Layer 2 destination ID, then destination ID may be carried in higher layer signaling e.g., in MAC signaling, MAC CE, or the like. Alternatively, a source ID may be used instead of destination ID. The source ID may be a Layer 1 source ID or a Layer 2 source ID. A combination of destination ID and source ID may also be used.

Solutions described in this application may also be applied to bandwidth part (BWP) operation (e.g., single or multi-BWP operation) in addition to multi-carrier operation.

### APPENDIX

**Acronym List**

| | |
|---|---|
| ACK | ACKnowledgement |
| BWP | Bandwidth Part |
| CC | Component Carrier |
| CCG | Component Carrier Group |
| CE | Control Element |
| CRC | Cyclic Redundancy Check |
| DCI | Downlink Control Information |
| HARQ | Hybrid Automatic Repeat Request |
| IE | Information Element |
| LTE | Long Term Evolution |
| MAC | Medium Access Control |
| NACK | Non-ACKnowledgement |
| NR | New Radio |
| PSCCH | Physical Sidelink Control Channel |
| PSSCH | Physical Sidelink Shared Channel |
| RAN | Radio Access Network |
| RB | Resource Block |
| RBG | Resource Block Group |
| RNTI | Radio Network Temporary Identifier |
| RRC | Radio Resource Control |
| SCI | Sidelink Control Information |
| SFI | Slot Format Indicator |
| SI | System Information |
| SL | Sidelink |
| UE | User Equipment |
| V2V | Vehicle-to-Vehicle |
| V2X | Vehicle-to-everything |

**Table 1**

| *Mapping between the CCs and CIF in SCI Format in Primary Carrier* | | |
|---|---|---|
| **Component Carriers** | **CIF in PSCCH** | ***bits*** |
| CC1 | 1 | 000 |
| CC2 | 2 | 001 |
| CC3 | 3 | 010 |
| CC4 | 4 | 011 |
| CC5 | 5 | 100 |
| CC6 | 6 | 101 |
| CC7 | 7 | 110 |
| CC8 | 8 | 111 |

**Table 2**

| *Association between the CCs and Multiple Resource Pools in Primary Carrier* | | |
|---|---|---|
| **Component Carriers Group** | **Resource Pool Index** | **CC in the system** |
| 1^{st} Resource Pool | 1 | CC1 |
| 2^{nd} Resource Pool | 2 | CC2 |
| 3^{rd} Resource Pool | 3 | CC3 |
| 4^{th} Resource Pool | 74 | CC4 |
| 5^{th} Resource Pool | 5 | CC5 |
| 6^{th} Resource Pool | 6 | CC6 |
| 7^{th} Resource Pool | 7 | CC7 |
| 8^{th} Resource Pool | 8 | CC8 |

**Table 3**

| *Association between the CCs and PSCCH Configurations in a Resource Pool in Primary Carrier* | | |
|---|---|---|
| **Resource Pool Index** | **PSCCH Configuration Index** | **CC in the system** |
| 1^{st} Resource Pool | 1 | CC1 |
| 1^{st} Resource Pool | 2 | CC2 |
| 1^{st} Resource Pool | 3 | CC3 |
| 1^{st} Resource Pool | 4 | CC4 |
| 1 ^{st} Resource Pool | 5 | CC5 |
| 1^{st} Resource Pool | 6 | CC6 |
| 1^{st} Resource Pool | 7 | CC7 |
| 1^{st} Resource Pool | 8 | CC8 |

**Table 4**

| *Association between the CCGs and Resource Pool Partitions* | | |
|---|---|---|
| **Component Carriers Group** | **Resource Pool Partition Index** | ***CCG*** |
| 1^{st} Resource Pool Partition | 1 | CCG1 |
| 2^{nd} Resource Pool Partition | 2 | CCG2 |
| 3^{rd} Resource Pool Partition | 3 | CCG3 |
| 4^{th} Resource Pool Partition | 4 | CCG4 |

**Table 5**

| *Mapping between the CCs within CCG and CI in CIF* | | |
|---|---|---|
| **Component Carriers** | **CI** | ***bits*** |
| CC1 | 1 | 00 |
| CC2 | 2 | 01 |
| CC3 | 3 | 10 |
| CC4 | 4 | 11 |

**Table 6 Mapping between the CCGs and CGI in CGIF**

| **Component Carriers Group** | **CGI** | ***bits*** |
|---|---|---|
| CCG | 1 | 00 |
| CCG2 | 2 | 01 |
| CCG3 | 3 | 10 |
| CCG4 | 4 | 11 |

**Table 7**

| *Association between the CCs within CCG and Resource Pool Partitions* | | |
|---|---|---|
| **Component Carriers Group** | **Resource Pool Partition Index** | **CC within CCG** |
| 1^{st} Resource Pool Partition | 1 | CC1 |
| 2^{nd} Resource Pool Partition | 2 | CC2 |
| 3^{rd} Resource Pool Partition | 3 | CC3 |
| 4^{th} Resource Pool Partition | 4 | CC4 |

**Table 8**

| *Association between the CCGs and Resource Pool Partitions* | | |
|---|---|---|
| **Multiple Resource Pools** | **Resource Pool Index** | ***CCG*** |
| 1^{st} Resource Pool | 1 | CCG1 |
| 2^{nd} Resource Pool | 2 | CCG2 |
| 3^{rd} Resource Pool | 3 | CCG3 |
| 4^{th} Resource Pool | 4 | CCG4 |

**Table 9**

| *- Association between the CCs within CCG and Multiple Resource Pools* | | |
|---|---|---|
| **Multiple Resource Pools** | **Resource Pool Index** | **CC within CCG** |
| 1^{st} Resource Pool | 1 | CC1 |
| 2^{nd} Resource Pool | 2 | CC2 |
| 3^{rd} Resource Pool | 3 | CC3 |
| 4^{th} Resource Pool | 4 | CC4 |

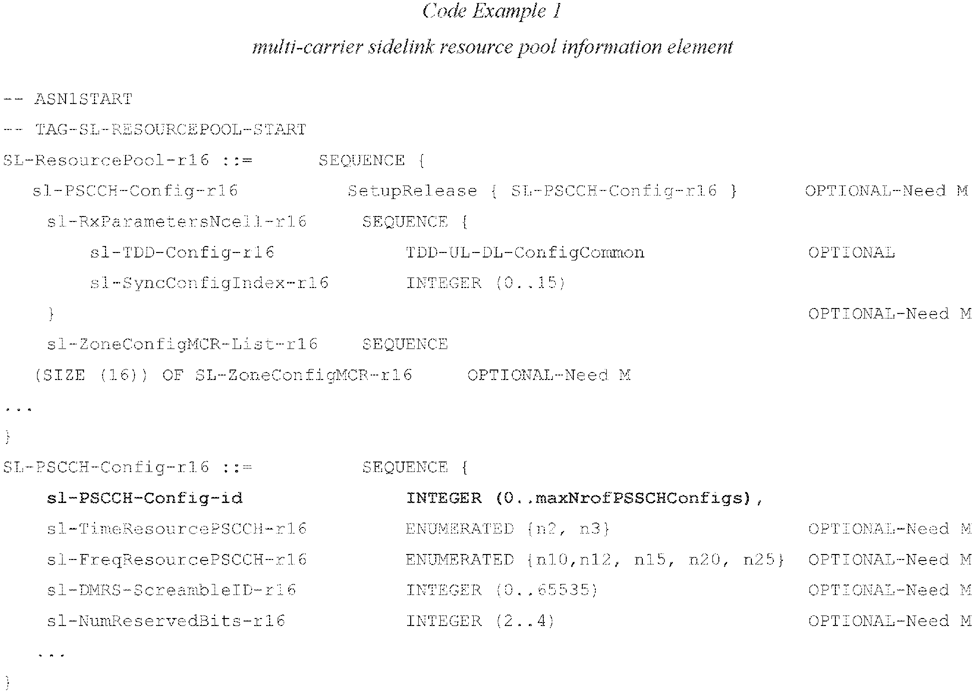

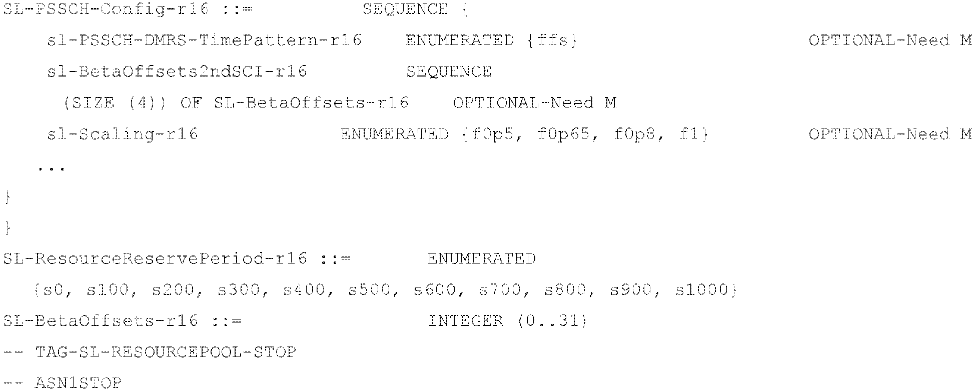

## Claims

1. A User Equipment, UE (102), comprising a processor (118), communication circuitry (120), and a memory (130, 132), the memory comprising a resource pool configuration; the memory further comprising computer-executable instructions which, when executed by the processor, cause the UE to:
blindly decode, in accordance with the resource pool configuration, a Physical Sidelink Control Channel, PSCCH, wherein the resource pool configuration comprises indications of resource pool partitioning and associations between the resource pool partitioning and sidelink component carrier groups, SL CCGs;
obtain, based on the blind decoding, a destination identifier, ID, and sidelink cross-scheduling information, wherein the sidelink cross-scheduling information comprises a SL carrier indication field, SL-CIF;
determine whether the destination ID matches the UE; and
if the destination ID matches the UE, then:
select, based on the SL-CIF and based on the resource pool partition where the PSCCH has been successfully decoded by the UE, the cross scheduled SL CC from among a plurality of SL CCs; and
decode a Physical Sidelink Shared Channel, PSSCH, in an allocated resource of the cross scheduled SL CC.

2. The UE of claim 1, wherein the SL CCGs include the plurality of SL CCs.

3. The UE of claim 1, wherein the instructions further cause the UE to:
determine whether SL-CIF operation is enabled;
if SL-CIF operation is enabled then determine the cross scheduled SL CC based on the SL cross-scheduling information; and
if SL-CIF operation is not enabled, determine the cross scheduled CC based on where PSCCH is successfully decoded by the UE.

4. The UE of claim 1, wherein the SL-CIF is obtained in downlink control information, DCI, format 3 or sidelink control information, SCI, format 1-A, or SCI format 2-A.

5. The UE of claim 1, wherein the SL CC is activated or deactivated via PSSCH or PSCCH.

6. The UE of claim 1, wherein the SL CC is activated or deactivated via sidelink medium access control, MAC, control element, CE, or PC5-MAC.

7. The UE of claim 1, wherein:
the instructions further cause the UE to select, based on a Sidelink Carrier Group Indication Field, SL-CGIF, comprised in the PSCCH and where the PSCCH is successfully decoded by the UE, the cross scheduled SL CC from among the SL CCs.

8. The UE of claim 1, wherein the destination ID is a Layer 1 destination ID or a Layer 2 destination ID.

9. A method performed by network equipment (114), comprising configuring a User Equipment, UE (102), with a resource pool configuration for blindly decoding a Physical Sidelink Control Channel, PSCCH, and enabling decoding of a Physical Sidelink Shared Channel, PSSCH, in an allocated resource of a cross scheduled sidelink component carrier, SL CC, for vehicle sidelink communications,
wherein the resource pool configuration comprises indications of resource pool partitioning and associations between the resource pool partitioning and sidelink component carrier groups, SL CCGs.

10. The method of claim 9, further comprising configuring the UE to use or not use a Sidelink Carrier Indication Field, SL-CIF, in determining, by the UE, a cross scheduled SL CC.

11. The method of claim 9, further comprising a transmitting UE to transmit a Physical Sidelink Control Channel, PSCCH, comprising a destination ID and a Sidelink Carrier Indication Field, SL-CIF.

12. The method of claim 9, wherein the SL CC is activated or deactivated via PSSCH or PSCCH.

13. The method of claim 9, further comprising configuring the UE to use or not use a Sidelink Carrier Group Indication Field, SL-CGIF, comprised in the PSCCH, in determining, by the UE, a cross scheduled SL CC.

14. The method of claim 9, further comprising a transmitting UE to transmit a Physical Sidelink Control Channel, PSCCH, comprising a destination ID and a Sidelink Carrier Group Indication Field, SL-CGIF.

## Patentansprüche

1. Benutzergerät, UE, (102), das einen Prozessor (118), eine Kommunikationsschaltung (120) und einen Speicher (130, 132) umfasst, wobei der Speicher eine Ressourcenpoolkonfiguration umfasst; wobei der Speicher ferner in einem Computer ausführbare Anweisungen umfasst, die, wenn sie von dem Prozessor ausgeführt werden, das UE veranlassen zum:
blinden Decodieren, gemäß der Ressourcenpoolkonfiguration, eines physischen Sidelink-Steuerkanals, PSCCH, wobei die Ressourcenpoolkonfiguration Anzeigen von einer Ressourcenpoolpartitionierung und von Assoziierungen zwischen der Ressourcenpoolpartitionierung und Sidelink-Komponententrägergruppen, SL-CCGs, umfasst;
Erhalten, basierend auf dem blinden Decodieren, einer Zielkennung, Ziel-ID, und von Sidelink-Kreuzträgerplanungsinformationen, wobei die Sidelink-Kreuzträgerplanungsinformationen ein SL-Trägeranzeigefeld, SL-CIF, umfasst;
Ermitteln, ob die Ziel-ID mit dem UE übereinstimmt; und
wenn die Ziel-ID mit dem UE übereinstimmt, dann:
Auswählen, basierend auf dem SL-CIF und basierend auf der Ressourcenpoolpartition, wo der PSCCH durch das UE erfolgreich decodiert wurde, des kreuzträgergeplanten SL-CC aus einer Vielzahl von SL-CCs; und
Decodieren eines gemeinsam genutzten physischen Sidelink-Kanals, PSSCH, in einer zugewiesenen Ressource des kreuzträgergeplanten SL-CC.

2. UE nach Anspruch 1, wobei die SL-CCGs die Vielzahl von SL-CCs beinhalten.

3. UE nach Anspruch 1, wobei die Anweisungen das UE ferner veranlassen zum:
Ermitteln, ob eine SL-CIF-Operation aktiviert wurde;
wenn die SL-CIF-Operation aktiviert wurde, Ermitteln des kreuzträgergeplanten SL-CC basierend auf den SL-Kreuzträgerplanungsinformationen; und
wenn die SL-CIF-Operation nicht aktiviert wurde, Ermitteln des kreuzträgergeplanten CC basierend darauf, wo der PSCCH durch das UE erfolgreich decodiert wurde.

4. UE nach Anspruch 1, wobei das SL-CIF in einem Format 3 der Downlink-Steuerinformationen, DCI-Format-3, oder einem Format 1-A der Sidelink-Steuerinformationen, SCI-Format-1-A, oder einem SCI-Format-2-A erhalten wird.

5. UE nach Anspruch 1, wobei der SL-CC über einen PSSCH oder einen PSCCH aktiviert oder deaktiviert wird.

6. UE nach Anspruch 1, wobei der SL-CC über ein Steuerelement einer Sidelink-Medienzugangssteuerung, MAC-CE, oder eine PC5-MAC aktiviert oder deaktiviert wird.

7. UE nach Anspruch 1, wobei:
die Anweisungen das UE ferner veranlassen zum Auswählen, basierend auf einem Sidelink-Trägergruppenanzeigefeld, SL-CGIF, das in dem PSCCH enthalten ist und basierend darauf, wo der PSCCH durch das UE erfolgreich decodiert wurde, des kreuzträgergeplanten SL-CC aus den SL-CCs.

8. UE nach Anspruch 1, wobei die Ziel-ID eine Schicht-1-Ziel-ID oder eine Schicht-2-Ziel-ID ist.

9. Verfahren, das von einem Netzwerkgerät (114) durchgeführt wird und das ein Konfigurieren eines Benutzergeräts, UE, (102) mit einer Ressourcenpoolkonfiguration zum blinden Decodieren eines physischen Sidelink-Steuerkanals, PSCCH, und zum Aktivieren eines Decodierens eines gemeinsam genutzten physischen Sidelink-Kanals, PSSCH, in einer zugewiesenen Ressource eines kreuzträgergeplanten Sidelink-Komponententrägers, SL-CC, für Fahrzeug-Sidelink-Kommunikationen umfasst,
wobei die Ressourcenpoolkonfiguration einige Anzeigen von einer Ressourcenpoolpartitionierung und von Assoziierungen zwischen der Ressourcenpoolpartitionierung und Sidelink-Komponententrägergruppen, SL-CCGs, umfasst.

10. Verfahren nach Anspruch 9, das ferner ein Konfigurieren des UE zum Verwenden oder zum nicht Verwenden eines SL-Trägeranzeigefelds, SL-CIF, beim Ermitteln eines kreuzträgergeplanten SL-CC durch das UE umfasst.

11. Verfahren nach Anspruch 9, das ferner ein Übertragungs-UE zum Übertragen eines physischen Sidelink-Steuerkanals, PSCCH, umfasst, der eine Ziel-ID und ein Sidelink-Trägeranzeigefeld, SL-CIF, umfasst.

12. Verfahren nach Anspruch 9, wobei der SL-CC über einen PSSCH oder einen PSCCH aktiviert oder deaktiviert wird.

13. Verfahren nach Anspruch 9, das ferner ein Konfigurieren des UE zum Verwenden oder zum nicht Verwenden eines Sidelink-Trägergruppenanzeigefelds, SL-CGIF, das in dem PSCCH enthalten ist, beim Ermitteln eines kreuzträgergeplanten SL-CC durch das UE umfasst.

14. Verfahren nach Anspruch 9, das ferner ein Übertragungs-UE zum Übertragen eines physischen Sidelink-Steuerkanals, PSCCH, umfasst, der eine Ziel-ID und ein Sidelink-Trägergruppenanzeigefeld, SL-CGIF, umfasst.

## Revendications

1. Equipement utilisateur, noté UE, (102), comprenant un processeur (118), une circuiterie de communication (120), et une mémoire (130, 132), la mémoire comprenant une configuration de pool de ressources ; la mémoire comprenant en outre des instructions exécutables par ordinateur qui, lorsqu'elles sont exécutées par le processeur, amènent l'UE à :
effectuer un décodage aveugle, conformément à la configuration de pool de ressources, d'un canal physique de contrôle en liaison latérale, noté PSCCH, la configuration de pool de ressources comprenant des indications de partitionnement de pool de ressources et des associations entre le partitionnement de pool de ressources et des groupes de porteuses composantes en liaison latérale, notés SL CCG ;
obtenir, sur la base du décodage aveugle, un identifiant, noté ID, de destination et d'informations d'ordonnancement croisé en liaison latérale, les informations d'ordonnancement croisé en liaison latérale comprenant un champ d'indication de porteuse en SL, noté SL-CIF ;
déterminer si l'ID de destination correspond ou non à l'UE ; et
si l'ID de destination correspond à l'UE, alors :
sélectionner, sur la base du SL-CIF et sur la base de la partition de pool de ressources où le PSCCH a été décodé avec succès par l'UE, la SL CC à ordonnancement croisé parmi une pluralité de SL CC ; et
décoder un canal physique partagé en liaison latérale, noté PSSCH, dans une ressource allouée de la SL CC à ordonnancement croisé.

2. UE selon la revendication 1, les SL CCG comportant la pluralité de SL CC.

3. UE selon la revendication 1, les instructions amenant en outre l'UE à :
déterminer si un fonctionnement en SL-CIF est ou non activé ;
si un fonctionnement en SL-CIF est activé, déterminer alors la SL CC à ordonnancement croisé sur la base des informations d'ordonnancement croisé en SL ; et
si un fonctionnement en SL-CIF n'est pas activé, déterminer la CC à ordonnancement croisé sur la base de l'emplacement où le PSCCH est décodé avec succès par l'UE.

4. UE selon la revendication 1, le SL-CIF étant obtenu dans des informations de contrôle en liaison descendante, notées DCI, format 3 ou des informations de contrôle en liaison latérale, notées SCI, format 1-A, ou des SCI format 2-A.

5. UE selon la revendication 1, la SL CC étant activée ou désactivée via le PSSCH ou le PSCCH.

6. UE selon la revendication 1, la SL CC étant activée ou désactivée via un élément de contrôle, noté CE, de la couche de contrôle d'accès au support, notée MAC, en liaison latérale ou la couche PC5-MAC.

7. UE selon la revendication 1,
les instructions amenant en outre l'UE à sélectionner, sur la base d'un champ d'indication de groupe de porteuses en liaison latérale, noté SL-CGIF, compris dans le PSCCH et de l'emplacement où le PSCCH est décodé avec succès par l'UE, la SL CC à ordonnancement croisé parmi les SL CC.

8. UE selon la revendication 1, l'ID de destination étant un ID de destination de la couche 1 ou un ID de destination de la couche 2.

9. Procédé réalisé par un équipement utilisateur (114), comprenant la configuration d'un équipement utilisateur, noté UE, (102) par une configuration de pool de ressources pour effectuer un décodage aveugle d'un canal physique de contrôle en liaison latérale, noté PSCCH, et permettre de décoder un canal physique partagé en liaison latérale, noté PSSCH, dans une ressource allouée d'une porteuse composante en liaison latérale, notée SL CC, à ordonnancement croisé pour des communications en liaison latérale de véhicules,
la configuration de pool de ressources comprenant des indictions d'un partitionnement de pool de ressources et des associations entre le partitionnement de pool de ressources et des groupes de porteuses composantes en liaison latérale, notés SL CCG.

10. Procédé selon la revendication 9, comprenant en outre la configuration de l'UE pour lui faire utiliser ou ne pas lui faire utiliser un champ d'indication de porteuse en liaison latérale, noté SL-CIF, lors de la détermination, par l'UE, d'une SL CC à ordonnancement croisé.

11. Procédé selon la revendication 9, comprenant en outre un UE émetteur pour émettre un canal physique de contrôle en liaison latérale, noté PSCCH, comprenant un ID de destination et un champ d'indication de porteuse en liaison latérale, noté SL-CIF.

12. Procédé selon la revendication 9, la SL CC étant activée ou désactivée via le PSSCH ou le PSCCH.

13. Procédé selon la revendication 9, comprenant en outre la configuration de l'UE pour lui faire utiliser ou ne pas lui faire utiliser un champ d'indication de groupe de porteuses en liaison latérale, noté SL-CGIF, compris dans le PSCCH, lors de la détermination, par l'UE, d'une SL CC à ordonnancement croisé.

14. Procédé selon la revendication 9, comprenant en outre un UE émetteur pour émettre un canal physique de contrôle en liaison latérale, noté PSCCH, comprenant un ID de destination et un champ d'indication de groupe de porteuses en liaison latérale, noté SL-CGIF.
